(19) Europäisches Patentamt / European Patent Office / Office européen des brevets

(11) **EP 3 661 346 B1**

(12) **FASCICULE DE BREVET EUROPEEN**

(45) Date de publication et mention de la délivrance du brevet:
**12.04.2023 Bulletin 2023/15**

(21) Numéro de dépôt: **18786834.4**

(22) Date de dépôt: **01.08.2018**

(51) Classification Internationale des Brevets (IPC):
***A01C 21/00*** *(2006.01)* ***A01B 79/00*** *(2006.01)*

(52) Classification Coopérative des Brevets (CPC):
**A01C 21/005;** A01B 79/005

(86) Numéro de dépôt international:
**PCT/FR2018/051990**

(87) Numéro de publication internationale:
**WO 2019/025735 (07.02.2019 Gazette 2019/06)**

(54) **PROCEDE POUR AUGMENTER LA PRODUCTIVITE D'UNE PARCELLE AGRICOLE VIS-A-VIS D'UNE VARIETE VEGETALE D'UNE ESPECE DONNEE DISPOSITIFS POUR LA MISE EN OEUVRE DE CE PROCEDE**

VERFAHREN ZUR ERHÖHUNG DES ERTRAGS EINES LANDWIRTSCHAFTLICHEN GRUNDSTÜCKS IN RELATION ZU EINER VARIETÄT EINER BESTIMMTEN PFLANZENSPEZIES UND VORRICHTUNGEN ZUR DURCHFÜHRUNG DIESES VERFAHRENS

METHOD FOR INCREASING THE YIELD OF AN AGRICULTURAL PLOT IN RELATION TO A VARIETY OF A SPECIFIC PLANT SPECIES AND DEVICES FOR IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2017 FR 1757359**

(43) Date de publication de la demande:
**10.06.2020 Bulletin 2020/24**

(73) Titulaire: **Vilmorin & Cie**
**75001 Paris (FR)**

(72) Inventeurs:
• **VERDENAL, Alban**
**63100 Clermont Ferrand (FR)**
• **RODRIGUEZ, Julien**
**63100 Clermont Ferrand (FR)**
• **KARAMAN, Zivan**
**63400 Chamalières (FR)**

(74) Mandataire: **Plasseraud IP**
**66, rue de la Chaussée d'Antin**
**75440 Paris Cedex 09 (FR)**

(56) Documents cités:
WO-A1-2011/091278 US-A1- 2003 018 431
US-A1- 2015 206 255 US-A1- 2015 302 305

## Description

### Domaine de l'invention

Le domaine de l'invention est celui de l'agriculture de précision.

Plus précisément, l'invention concerne un procédé pour accroître la productivité d'une parcelle agricole (P) vis-à-vis d'une variété végétale d'une espèce donnée, en améliorant la gestion des intrants, tels que le semis par la modulation de sa densité.

L'invention vise également:

- un procédé d'apport d'au moins un intrant sur la parcelle (P) destinée à produire une variété végétale d'une espèce donnée sur une parcelle (P), selon une carte de préconisation;
- un procédé de semis d'une variété végétale d'une espèce donnée sur une parcelle (P), selon une carte de préconisation de la densité de semis sur la parcelle (P);
- un procédé de réalisation d'une préconisation adaptée, de préférence d'une carte de préconisation, d'apport d'au moins un intrant sur la parcelle;
- un logiciel pour la mise en oeuvre du procédé selon l'invention ;
- un support de stockage d'une carte de préconisation d'apport d'un intrant, de préférence le semis par modulation de sa densité, sur (P); un support de stockage du logiciel,
- un dispositif d'apport de l'intrant, en particulier un semoir ;
- un module informatique comprenant le logiciel et destiné à équiper le dispositif d'apport de l'intrant, en particulier le semoir.

### Arrière-plan technologique - problème technique

L'agriculture de précision consiste à mettre en oeuvre des moyens technologiques pour l'optimisation des rendements et de la gestion des intrants au sein d'une parcelle agricole, dans laquelle sont cultivées diverses variétés végétales appartenant à différentes espèces. Ces moyens technologiques ont pour objectif l'optimisation de la gestion des parcelles agricoles tant d'un point de vue agronomique pour rationaliser les apports d'intrants et contrôler ainsi les coûts de production, que d'un point de vue environnemental pour préserver les ressources naturelles. L'agriculture de précision peut permettre d'adapter les densités de semis sur une parcelle (P), d'une variété végétale dans une espèce donnée, selon les qualités agricoles du sol, la topographie, la climatologie,... de la parcelle (P).

En effet, certaines zones de la parcelle (P) peuvent avoir un potentiel de production plus élevé et peuvent donc recevoir une densité de semis par unité de surface, plus importante de façon à maximiser le rendement des zones les plus favorables. En revanche, dans les zones de (P) moins favorables, la mise en oeuvre de densités de semis faibles optimise un compromis entre apport d'intrants et rendements, en limitant la compétition vis-à-vis des ressources disponibles.

En fait, l'agriculture de précision est une prise en compte de la variabilité intra-parcellaire ainsi que du contexte agro-climatique, aux fins de gérer la conduite de la parcelle vis-à-vis de l'apport de la bonne dose d'intrants, au bon endroit, au bon moment.

Les paramètres qui déterminent la variabilité intra-parcellaire sont entre autres : la topographie, la pédologie, la climatologie, et l'historique agricole de la parcelle... Les indicateurs de biomasse obtenus par l'imagerie aérienne/satellite sont un moyen de mesurer la résultante de ces différents facteurs.

La demande de brevet US2003/0018431A1 décrit des méthodes et des systèmes de gestion de parcelles agricoles, dans lesquels sont réalisés des profils de différents paramètres tels que l'altitude, l'image satellite, la conductivité du sol, les rendements historiques de la parcelle. Ces profils sont combinés et analysés au moyen d'un logiciel dénommé AGIS® de la société Delta Data System, pour générer un profil de gestion de la parcelle. Ainsi, il est par exemple créé 12 zones agronomiques pour la parcelle, chacune de ces zones agronomiques tenant compte de l'analyse des profils de paramètres subdivisés. La parcelle est découpée en portions, dont chacune est catégorisée dans l'une des 12 zones agronomiques. Par exemple, la zone agronomique 3 peut-être corrélée à un profil donné d'altitude (dépression) et à un profil donné d'images satellites (faible rendement), tandis que la zone agronomique 9 peut-être, quant à elle, corrélée à un autre profil d'images satellites (rendement moyen) et à un profil de conductivité du sol donné (faible conductivité).

Selon cette demande de brevet US2003/0018431A1, le profil de gestion de la parcelle peut être utilisé pour générer une carte de préconisation d'apport d'un intrant sur ladite parcelle. Au-delà de ces généralités, la demande de brevet US2003/0018431A1 ne donne aucune information précise permettant la réalisation du profil de gestion de parcelle et de la carte de préconisation d'apport d'un intrant sur ladite parcelle. En outre, elle ne propose pas la mise en oeuvre d'un modèle de culture décrivant la croissance et le développement de cultures en interaction avec leurs conditions agroenvironnementales. La demande de brevet US2003/0018431A1 ne divulgue donc pas une méthode opérationnelle complète dans le domaine de l'agriculture de précision. En effet, cette demande ne concerne que la caractérisation de la variabilité intra-parcellaire mais pas la création d'une préconisation, qui est pourtant au coeur de l'agriculture de précision.

La demande de brevet US2015/0206255A1 concerne une méthode de préconisation de densité de semis consistant à collecter des données constituées par des images satellites, à les convertir en les traitant pour donner un indice de biomasse (NDVI) d'une parcelle agricole pendant la période de végétation, à produire une carte de la parcelle représentant le NDVI et à générer une carte de préconisation de densité de semis à partir de cette carte NDVI. Cette dernière étape est effectuée en obtenant la densité de semis maximale recommandée pour une espèce végétale donnée, en faisant correspondre une valeur de NDVI égale à un, à la densité de semis maximale recommandée, et une valeur de NDVI égale à zéro, à la densité de semis minimale recommandée. Les densités de semis pour les valeurs intermédiaires sont interpolées en prenant pour base la mise à l'échelle "scaling" des données NDVI et la carte NDVI. Enfin, la carte de préconisation de densité de semis variable est générée sur la base de la densité de semis variable définie pour la parcelle agricole considérée. La densité de semis maximale recommandée pour une espèce végétale pour une variété végétale donnée, peut être remplacée par la densité de semis maximale pour cette espèce végétale issue de l'expérience de l'agriculteur. Cette méthode d'amélioration de la productivité au moyen d'une carte de préconisation de densité de semis, repose sur un seul paramètre, le NDVI, propre aux plantes cultivées sur la parcelle, et, s'agissant de l'espèce végétale considérée, seulement sur les recommandations du semencier, lesquelles se fondent sur l'expérience de l'agriculteur pour cette espèce végétale. Aucun modèle de culture n'est employé pour simuler la croissance des plantes et déterminer les densités optimales de semis de la variété considérée en fonction du contexte pédo-climatique local. Ces limitations quant aux paramètres pris en compte, affectent la fiabilité de la méthode proposée dans cette demande de brevet US2015/0206255A1.

En outre, du fait de la prise en compte d'un historique de culture restreint, cette méthode n'est ni suffisamment représentative, ni suffisamment précise.

WO 2011/091278-A1 décrit une méthode pour promouvoir les performances agricoles, dans laquelle:

1. on reçoit une pluralité de fichiers matriciels (images satellitaires ou aériennes/cartes de pente du terrain) d'une zone d'intérêt (ZI), en provenance d'un détecteur par l'intermédiaire d'un réseau ;
2. on génère au moins un fichier matriciel d'indexation (indicateur de biomasse) à partir des fichiers matriciels (ZI);
3. on définit au moins une région de rendement agricole à l'intérieur de la ZI (chaque région de rendement possède des caractéristiques similaires de culture et de terrain, de réponse de données, d'approche managériale et/ou de rendements mesurés) ;
4. on détermine un hybride et un taux de semis de l'hybride dans au moins une zone de rendement agricole ;
5. on génère une recommandation de plantation pour la ZI en fonction de l'hybride et du taux de semis;
6. on fournit une recommandation de plantation à un dispositif-semoir configuré pour planter l'hybride dans au moins une zone de rendement agricole, selon le taux de semis.

Force est donc de constater que l'existant ne propose pas de procédé et de moyens associés permettant d'augmenter la productivité d'une parcelle agricole, qui soit basée sur des méthodes concrètes et efficaces (non virtuelles) multiparamétriques, simples, fiables, inter- opérables et compatibles avec les différents formats de fichiers utilisables par les engins agricoles délivrant des intrants sur les cultures.

## Objectifs de l'invention

La présente invention vise à satisfaire au moins l'un des objectifs énumérés ci-après.

◦ fournir un procédé perfectionné pour accroître la productivité d'une parcelle agricole (P) vis-à-vis d'une variété végétale d'une espèce donnée, en améliorant la gestion des intrants, tels que le semis par la modulation de sa densité;
o fournir un procédé perfectionné pour accroître la productivité d'une parcelle agricole (P) vis-à-vis d'une variété végétale d'une espèce donnée, en améliorant la gestion des intrants, tels que le semis par la modulation de sa densité; ce procédé permettant en particulier une bonne modulation des intrants en apportant la bonne densité de semis d'intrants, au bon moment et au bon endroit ;
o fournir un procédé perfectionné pour accroître la productivité d'une parcelle agricole (P) vis-à-vis d'une variété végétale d'une espèce donnée, en améliorant la gestion des intrants, tels que le semis par la modulation de sa densité; ce procédé étant d'une grande spécificité vis-à-vis de la variété végétale considérée, vis-à-vis des qualités intrinsèques du sol de la parcelle agricole concernée et vis-à-vis de l'environnement climatologique de ladite parcelle ;
o fournir un procédé perfectionné, simple et fiable, pour accroître la productivité d'une parcelle agricole (P) vis-à-vis d'une variété végétale d'une espèce donnée;

o fournir un procédé perfectionné, simple et fiable d'apport d'au moins un intrant sur la parcelle (P) destinée à produire une variété végétale d'une espèce donnée sur une parcelle (P), selon une carte de préconisation;

o fournir un procédé perfectionné, simple et fiable de semis d'une variété végétale d'une espèce donnée sur une parcelle (P), selon une carte de préconisation de la densité de semis sur la parcelle (P);

o fournir un procédé perfectionné, simple et fiable de réalisation d'une préconisation adaptée, de préférence d'une carte de préconisation, d'apport d'au moins un intrant sur la parcelle;

o fournir un logiciel pour la mise en oeuvre du procédé selon l'invention ;

o fournir un support de stockage d'une carte de préconisation d'apport d'un intrant, de préférence le semis par modulation de sa densité, sur (P); un support de stockage du logiciel,

o fournir un dispositif d'apport de l'intrant, en particulier un semoir ;

o fournir un module informatique comprenant le logiciel pour la mise en oeuvre du procédé selon l'invention et destiné à équiper le dispositif d'apport de l'intrant, en particulier le semoir.

**Brève description de l'invention**

Ces objectifs, parmi d'autres, sont atteints par la présente invention qui concerne tout d'abord un procédé, mis en oeuvre par ordinateur, pour augmenter la productivité d'une parcelle agricole (P) vis-à-vis d'une variété végétale d'une espèce donnée, consiste

a. à collecter des données géoréférencées sur P qui rendent compte de la productivité de différentes zones de P; ces données appartenant à des types Tn (n=entier positif), constitués par :

T1. des données géophysiques de P, de préférence conductivité/résistivité,
T2. des données topographiques de P;
T3. des cartes de rendements de P;
T4. des indicateurs de la biomasse végétale produite sur P (indices de végétation) obtenus par imagerie aérienne, de préférence le Normalized Différence Vegetation Index (NDVI);

b. à traiter ces données Tn pour les regrouper sur P en utilisant des méthodes géostatistiques appropriées;

c. à décomposer P, pour tout ou partie des regroupements -de préférence pour chaque regroupement- obtenus à l'étape (b), en différentes zones de gestion ($Z_g$) et classifier ces différentes zones ($Z_g$) en différentes classes $C_{k \, (k=entier \, positif)}$, par classification automatique statistique;

d. à regrouper les zones de gestion ($Z_g$) de P, de manière à supprimer les zones de gestion ($Z_g$) dont la surface ou la plus grande dimension, est inférieure à une limite (L) fixée par les contraintes techni-ques liées au matériel agricole et aux pratiques agricoles mis en oeuvre sur la parcelle P;

e. à déterminer un Indice de Productivité Adimensionnel (IPA) pour chacune des classes $C_k$ affectées aux zones de gestion ($Z_g$) de P, en attribuant par pondération à chaque classe $C_k$, une valeur représentative de sa contribution à la productivité de la parcelle;

f. à fixer un Potentiel de Rendement sur P (PRP) de l'espèce considérée à partir d'une moyenne des rendements historiques sur P pour l'espèce considérée;

g. à calculer, à partir de l'IPA obtenu à l'étape (e) et du PRP obtenu à l'étape (f) et à l'aide d'une fonction mathématique donnée, le Potentiel de Rendement (PR) de l'espèce considérée, pour chacune des zones de gestion ($Z_g$);

h. à déterminer une Densité de Semis (DS), pour la variété de l'espèce végétale considérée et pour chacune des classes $C_k$, à partir d'une relation mathématique donnant DS en fonction de PR et dont au moins une partie des constantes est obtenue sur la base de simulations produites à partir d'un modèle écophysiologique:

- qui est calibré à partir de données expérimentales,
- qui reproduit le comportement de la variété de l'espèce végétale considérée en fonction de conditions environnementales, de préférence sol / météorologie,
- et qui permet, d'une part, de simuler les rendements de cette variété ou de cette espèce en fonction de différentes conditions environnementales et, d'autre part, de déterminer les densités de plantes optimales pour la variété considérée;

i. à produire au moins une carte de P sur laquelle sont reportées les DS obtenues à l'étape (h) pour toutes les zones de gestion ($Z_g$), cette carte étant une carte de préconisation de DS;

j. à semer la variété végétale considérée sur la parcelle P en se conformant à la carte de préconisation de DS de l'étape (i), avec un dispositif-semoir automatisé géolocalisable et équipé pour lire une carte numérique de préconisation de DS produite à l'étape (i) du procédé.

Le procédé selon l'invention est avantageux en ce qu'il intègre:

→ un ou plusieurs types différents Tn de données propres à la parcelle P et reflétant son potentiel de production par rapport à l'espèce végétale donnée, sur plusieurs zones de gestion ($Z_g$) hiérarchisées sur une échelle de productivité donnée par l'indice IPA;
→ un potentiel de rendement (PR) pour chaque zone ($Z_g$), issu de la combinaison de l'IPA et d'un potentiel de rendement sur P (PRP) historique pour l'espèce considérée;
→ et des données de simulation de croissance de la variété végétale donnée, produites par un modèle éco-physiologique calibré à partir de données expérimentales.

Cette approche nouvelle combinant des informations diverses et précises sur la variété végétale et la parcelle, est particulièrement spécifique de la variété végétale donnée et de la parcelle. Elle donne accès à une préconisation intra-parcellaire localisée des plus pertinentes, pour l'apport d'un intrant à la parcelle, en l'occurrence le semis par modulation de sa densité.

Cela permet à l'agriculteur de procéder à une bonne et une fine modulation de la dose de semence, à délivrer parcelle par parcelle, pour optimiser le bilan économique, agronomique et environnemental.

Cette approche nouvelle permet de préconiser une densité adaptée à l'interaction historique sol-climat (sur plusieurs années), ce qui rend cette méthode précise et représentative.

Sur le même modèle de mise en oeuvre, il est envisageable de remplacer l'intrant : semis avec modulation de la densité de semis, par un autre intrant, tel que la dose de fertilisant(s) par unité de surface parcellaire.

Au dehors de l'invention revendiquée, l'environnement de l'invention comprend un support, pour la mise en oeuvre du procédé selon l'invention, de stockage non transitoire lisible par ordinateur, stockant au moins une version numérique d'au moins une carte de préconisation de DS pour une parcelle P, ladite carte étant telle que produite à l'étape (i) du procédé selon l'invention.

Selon un autre de ses aspects, l'invention concerne un programme d'ordinateur comprenant une série d'instructions qui, lorsqu'elles sont exécutées par un processeur, mettent en oeuvre un procédé selon l'invention, dans lequel l'étape (j) est exécutée par un dispositif-semoir automatisé géolocalisable et équipé pour lire une carte numérique de préconisation de DS produite à l'étape (i) du procédé.

Au dehors de l'invention revendiquée, l'environnement de l'invention comprend un support de stockage non transitoire lisible par ordinateur, stockant un programme d'ordinateur comprenant une série d'instructions qui, lorsqu'elles sont exécutées par un processeur, mettent en oeuvre un procédé selon l'invention.

Selon un autre de ses aspects, l'invention concerne un dispositif-semoir configuré pour la mise en oeuvre du procédé selon l'invention, automatisé géolocalisable et équipé pour lire une carte numérique de préconisation de DS produite à l'étape (i) du procédé selon l'invention.

Selon un autre de ses aspects, l'invention concerne, un module informatique inclus dans le dispositif-semoir selon l'invention et permettant la géolocalisation dudit dispositif-semoir selon l'invention et le semis d'une variété végétale de l'espèce donnée sur une parcelle P, en se conformant à une carte numérique de préconisation de DS produite à l'étape (i) du procédé selon l'invention.

## Description détaillée de l'invention

### Définitions

La terminologie employée dans le présent exposé est explicitée au travers des définitions qui suivent et qui sont toutes des exemples non limitatifs:
Un singulier désigne également un pluriel et réciproquement.

*"variété végétale"* désigne une population artificielle obtenue en vue de son usage en agriculture, correspondant à la subdivision la plus basse du règne végétal. Elle doit être reproductible, homogène et stable dans ses caractéristiques génétiques et distincte des autres variétés.
*"espèce végétale"* désigne le groupe d'individus ayant des caractères morphologiques, physiologiques et chromosomiques semblables et qui peuvent se croiser entre eux *"Modèle écophysiologique"* : il s'agit d'algorithmes basés sur la connaissance écophysiologique des cultures, qui permettent de calculer, entres autres, à partir notamment d'une description de la culture, du sol de la parcelle et de variables climatiques:

- l'accumulation de biomasse par photosynthèse et donc le rendement de la culture,
- les principaux besoins en éléments minéraux afférents à cette photosynthèse, dont ceux en eau et en éléments fertilisants (et donc de raisonner l'irrigation et la fertilisation).

-I- Procédé pour augmenter la productivité de la parcelle P

*Etape (a): Collecte des données de type(s) Tn*

Il s'agit de constituer une base de connaissances de la parcelle P en recueillant des données de type(s) Tn, de natures diverses.

Ces données de type(s) Tn sont géoréférencées, c'est-à-dire qu'à chaque donnée correspond avantageusement des coordonnées (x,y) sur P.

Les données géophysiques de type T1 telles que la résistivité ou la conductivité du sol de différentes unités de surface de la parcelle P, peuvent être mesurées à différentes profondeurs, par exemple entre 0 et 50 cm, entre 0 et 100 cm et entre 0 et 170 cm.

Les données topographiques de type T2 peuvent être, par exemple, l'altitude centrée, la pente... de différentes unités de surface de la parcelle P. De telles données peuvent notamment être acquises grâce à un système de positionnement par satellite de type GPS ou Galileo combiné avec la technique de positionnement dénommée *"Cinématique temps réel (Real Time Kinematic, en anglais ou RTK)"* ou grâce à un système de télédétection par laser ou LIDAR, acronyme de l'expression en langue anglaise *"light détection and ranging"* ou *"laser détection and ranging",* est une technique de mesure à distance fondée sur l'analyse des propriétés d'un faisceau de lumière renvoyé vers son émetteur.

Les données de type T3 [collectées à l'étape(a)] sont des cartes de rendements intraparcellaires de culture sur P de l'espèce végétale considérée ou d'autres espèces végétales, de préférence sur au moins 3 années de culture.

Sur une caractéristique remarquable de l'invention, les données T4 [collectées à l'étape (a)], à savoir les indices de végétation, de préférence le NDVI, sont obtenus à partir d'au moins 2 - idéalement au moins 4 - images aériennes numérisées - de préférence satellites - de P, collectées sur au moins 2 - idéalement au moins 3 - années.

Ces indices de végétation sont obtenus grâce à des capteurs de mesure embarqués dans des satellites d'observation de la terre. Ces mesures sont par exemple celle du rayonnement solaire réfléchi dans le rouge et le proche infrarouge pour suivre l'activité photosynthétique et la surface foliaire ou la biomasse verte. Les plantes chlorophylliennes absorbent les longueurs d'onde du rouge pour alimenter la photosynthèse tandis que les structures cellulaires des parois réfléchissent fortement le proche infrarouge. La combinaison de longueur d'onde permet de produire différents indices de végétation tels que le *"Normalized Difference Végétation Index"* NDVI. Cet indice, parmi d'autres (tels que *"Chlorophyll Vegetation Index"* CVI, *"Enhanced Végétation Index"* EVI, *"Soil Adjusted Végétation Index"* SAVI, *" Green Normalized Difference Vegetation Index* " GNDVI, ....), peut être un témoin de la croissance de la biomasse au sein de différentes parcelles P.

Les données de type T4 étant, selon un mode préféré de mise en oeuvre de l'invention, des images, il est prévu, conformément à une caractéristique remarquable de l'invention, de retirer une zone tampon (buffer) des images concernées afin de limiter les effets de bordure, lors de l'interprétation desdites images.

La largeur de la zone tampon retirée est avantageusement déterminée en fonction de la résolution des images utilisées.

Comme autres exemples de données de type(s) Tn sur la parcelle, on peut citer les données historiques sur le climat de la parcelle, les données historiques sur les différentes cultures effectuées sur cette parcelle, les découpages et les remembrements historiques qui ont conduit à la délimitation de la parcelle, les observations visuelles permettant de détecter la nature géologique de la parcelle, les mauvaises herbes se développant sur la parcelle, les réflectances mesurées à différentes longueurs d'ondes sur la parcelle à l'aide de capteurs placés à proximité du sol (N-sensor®), la composition physico-chimique du sol de la parcelle, la structure, la texture, la granulométrie, l'humidité, la capacité d'échange cationique les taux d'éléments fertilisants, les éléments traces et la teneur en matière organique ...

*Etape (b): Regroupement des différentes données de type(s) Tn sur P*

Les données de type(s) Tn sont sous forme de fichiers informatiques de différents formats (*e.g.* rasters, vecteurs...) qui peuvent être stockés sur des supports différents selon leur nature, leur résolution ou leurs systèmes de projection géographiques. Ces données sont regroupées sur un repère géospatial unique en utilisant des méthodes géostatistiques appropriées, par exemple le krigeage ordinaire. Si ces données sont déjà représentées sur un repère géospatial unique, cette étape n'est plus nécessaire.

Ainsi, la position sur P d'une donnée de type Tn est avantageusement exprimée avec le même système de localisation que celui de toutes les autres données Tn exploitées.

Le regroupement s'opère de préférence sur une grille. Cette grille, qui se superpose au contour de la parcelle P présente un maillage régulier. Cette grille est constituée de points équidistants géoréférencés dans un système de projection en coordonnées cartésiennes approprié à la localisation géographique de P. La distance entre les points est déterminée en fonction de la surface parcellaire ou de la résolution des données Tn. Idéalement cette distance est de 5 mètres, voire 10 mètres ou plus. Toutes les données Tn disponibles sont reprojetées dans le même système en coordonnées cartésiennes. Toutes les données Tn disponibles reprojetées sont ensuite interpolées sur la grille en utilisant des méthodes géostatistiques appropriées, par exemple le krigeage ordinaire. La grille regroupant les données caractéristiques de P qui sont implémentées dans les étapes suivantes du procédé, peuvent être virtuelles et/ou peuvent faire l'objet d'un affichage sous forme d'images sur un support tel qu'un écran ou sur un élément matériel susceptible de recevoir une impression (feuille en papier).

*Etape (c): Décomposition de P dans la grille obtenue à l'étape (b) en différentes zones de gestion*

Cette étape est l'une des étapes essentielles du procédé selon l'invention. Elle consiste à générer une partition optimale de la parcelle P, pour tout ou partie des regroupements - de préférence pour chaque regroupement (*e.g.* sur la grille) de l'étape (b), au travers d'un ou plusieurs types de données Tn, de façon à mettre en évidence l'hétérogénéité intraparcellaire.

Pour ce faire, on procède à une décomposition de la parcelle en un certain nombre de zones de gestion ($Z_g$) homogènes vis-à-vis d'un ou plusieurs types de données Tn.

Cette décomposition est réalisée par classification automatique statistique de P en (x) différentes zones de gestion (Zg) homogènes dans différentes classes $C_{k\ (k=entier\ positif)}$. Chaque classe $C_k$ se définit au travers d'une valeur ou d'un état sur lequel sont centrées l'ensemble des données Tn qui constitue une zone de gestion (Zg) homogène ou au travers d'un intervalle de valeurs ou d'états comprenant l'ensemble des données Tn qui constitue une zone de gestion (Zg) homogène.

Par exemple, si l'on considère des données T1 de résistivité Ro du sol de la parcelle P, comprises entre 0 et 500 $\Omega$.m , on peut définir les 4 classes $C_1$ $C_2$ $C_3$ $C_4$ suivantes : $C_1$: $0 \le R < 150$ ; $C_2$: $150 < R \le 250$ ; $C_3$: $250 < R \le 350$ ; $C_4$: $350 < R \le 500$.

Une parcelle P pourra ainsi *e.g.* comprendre 4 (Zg) dans la classe C1, 5 (Zg) dans la classe C2, 3(Zg) dans la classe C3, et une (Zg) dans la classe C4.

Cette classification détermine la notion d'homogénéité d'une zone de gestion ($Z_g$), qui se définit notamment, au sens de l'invention, par rapport à la variabilité globale des données Tn sur la parcelle P.

La méthode de classification automatique statistique est choisie parmi les méthodes connues, par exemple parmi celles qui reposent sur une structure de classification par partition, par recouvrement et/ou par hiérarchie.

Sur une variante de mise en oeuvre, l'étape (c) de décomposition P en (x) différentes zones de gestion (Zg), est effectuée à partir d'au moins deux types Tn,Tn' de données, de préférence en combinant sur une même grille définissant un maillage régulier dans la parcelle P, les données d'au moins deux types Tn,Tn' de données, par interpolation géostatistique. Ces données sont par la suite classifiées pour constituer un regroupement en classes $C_k$.

Ainsi, la classification automatique statistique d'un ensemble de données, par exemple

- 3 données T1, à savoir T1$^1$ résistivité Ro en $\Omega$.m 0- 50 cm, T1$^2$ résistivité Ro en $\Omega$.m à 0-100 cm, T1$^3$ résistivité Ro en $\Omega$.m à 0-150 cm,
- et de 2 données T2, à savoir T2$^1$ altitude centrée en m et T2$^2$ pente en %,

conduit à une cartographie de la parcelle P selon des zones de gestion (Zg) de 4 classes $C_k$=1 à 4.

*Etape (d) facultative : lissage*

Cette étape (d) facultative mais néanmoins préférée vise à éliminer les zones de gestion ($Z_g$) appartenant à une classe $C_k$ attribuée à l'étape (c), qui sont des îlots de trop petite taille, dans lesquels il ne serait pas possible de réaliser un apport d'intrant, en l'espèce le semis dont la densité est modulée, homogène et circonscrit à la surface de ladite zone ($Z_g$), en raison des contraintes liées au matériel agricole utilisé et aux pratiques agricoles en vigueur sur la parcelle P.

Par exemple, un semoir agricole a une largeur minimale pour des raisons évidentes d'efficacité agricole. Ainsi, pour une zone de gestion ($Z_g$) isolée et dont la plus grande dimension serait inférieure à cette largeur minimale de semoir agricole, il ne serait pas possible de délivrer la quantité d'intrant, à savoir en l'espèce le semis dont la densité est modulée, approprié pour ladite zone de gestion ($Z_g$) isolée, sans déborder sur la ou les zones de gestion connexe ($Z_g$) à cette zone de gestion ($Z_g$) isolée.

Le lissage selon l'étape (c) consiste donc à éliminer et réinterpréter par une méthode géostatistique les zones de gestion ($Z_g$) isolées dont la surface ou la plus grande dimension est inférieure à une limite (L), par exemple de 100 m$^2$ ou 5 m.

Au terme de cette étape (d), le procédé selon l'invention permet d'établir une carte de P comportant chacune une ou plusieurs zones de gestion ($Z_g$) de P de classe(s) $C_k$, correspondant chacune à une source de données Tn.

Chaque source de données Tn peut elle-même être issue de la combinaison de différentes données Tn(z), avec z correspondant à un entier positif

*Etape (e): Indice de Productivité Adimensionnel (IPA)*

Le recours, conformément à l'invention, à un indice de productivité adimensionnelle IPA, est une modalité opératoire remarquable, qui permet de caractériser de manière fiable les zones de gestion ($Z_g$) sur la base de la variance des données Tn, laquelle permet d'exprimer la variabilité interclasse $C_k$ et d'ordonner les zones de gestion ($Z_g$) de la parcelle selon leur productivité vis-à-vis de la variété végétale considérée.

Pour obtenir l'IPA, on attribue par pondération à chaque classe $C_k$ affectée à chaque zone de gestion ($Z_g$) de P, pour tout ou partie des regroupements comprenant les zones de gestion ($Z_g$) [de préférence pour chaque regroupement], une valeur représentative de sa contribution relative à la productivité de la parcelle.

De préférence, la pondération qui permet l'attribution à chaque classe $C_k$ d'un IPA, consiste essentiellement à soumettre tout ou partie des regroupements [de préférence chaque regroupement] comprenant les zones de gestion ($Z_g$) obtenue à partir d'un type ou de différents types de données Tn, à une transformation centrée réduite de la (des) donnée(s) Tn composant le regroupement par exemple sur une grille, puis à calculer, pour chacune des classes $C_k$, la moyenne arithmétique de la (des) donnée(s) Tn centrée réduite, ladite moyenne constituant l'IPA.

Par exemple, l'IPA peut être compris entre 0,48 et 0,53. Ces 2 valeurs limites représentent respectivement la contribution la plus faible d'une classe $C_{k=min}$ à la productivité de P et la contribution la plus forte d'une classe $C_{k=max}$ à la productivité de P. En relatif, $C_{k=max}$ contribue donc à la productivité de P, à hauteur de 9,4 % de plus que Ck=min.

Comme la grille de regroupement de données Tn, la grille de regroupement basée sur l'IPA peut être une représentation cartographique de P, dans laquelle les zones de gestion ($Z_g$) de P de classe(s) $C_k$ se distinguent les unes des autres, *e.g.*, par des variations de contraste et/ou de couleur.

*Etape (f): Potentiel de Rendement sur P (PRP) de l'espèce considérée*

Dans cette étape (f) du procédé selon l'invention, il s'agit de consolider la fiabilité du résultat en exploitant des données réelles que sont les rendements historiques effectivement obtenus par l'agriculteur sur cette parcelle P et pour l'espèce correspondant à celle de la variété végétale considérée.

Avantageusement, cette étape (f) consiste ainsi à collecter des rendements historiques sur P pour l'espèce visée, quelle que soit la variété qui peut être différente de la variété considérée dans le procédé mis en oeuvre, à calculer la tendance des rendements historiques en tenant compte de conditions particulières de chaque récolte (campagne, année) et à utiliser cette moyenne pour fixer le PRP. Par exemple, la moyenne des rendements historiques pour l'espèce visée peut-être de 10 t par hectare. Il peut être décidé, en fonction des connaissances agronomiques disponibles sur P d'ajuster ou de remplacer cette valeur. Suivant une caractéristique remarquable de l'invention, ce PRP est une valeur déclarative extraite des rendements historiques de la parcelle P, ou une valeur calculée sur la base des connaissances du contexte pédo-climatique de la parcelle.

*Etape (g): Calcul du Potentiel de Rendement (PR)*

Le potentiel de rendement PR de chaque zone de gestion ($Z_g$) de classe $C_k$ de la parcelle P, est déterminé conformément à l'invention par une fonction mathématique qui intègre l'IPA et le PRP.

Selon une variante, la fonction mathématique de l'étape (g) est une relation linéaire entre l'Indice de Productivité Adimensionnel IPA et le potentiel de rendement PR en fonction de la valeur du PRP.

Par exemple, des IPA de 0,48 et de 0,53 sont transformés par cette fonction mathématique en potentiel de rendement PR en tonnes par hectare de, respectivement, 7,2 et 8,8.

*Etape (h): détermination de la densité de semis (DS)*

Il s'agit dans cette étape de déduire DS pour la variété végétale considérée et pour chacune des classes $C_k$ à partir d'une relation mathématique comprenant PR et dans laquelle au moins une partie des constantes provient de simulation de croissance produite à partir d'un modèle écophysiologique calibré à partir d'expérimentations.

De préférence, la relation mathématique mise en oeuvre dans l'étape (h) est la suivante:

$$DS = b_m - [(MaxPot) - PR) * a];$$

dans laquelle:

*a* est la pente de la droite de régression de DS de la variété considérée en fonction du PR;
*MaxPot* est le PR maximum de la variété en conditions peu limitantes;
$b_m$ est l'ordonnée de la droite à *MaxPot*;
*a*, $b_m$ étant de préférence obtenus par simulation à partir d'un modèle écophysiologique ou à partir de données expérimentales.

Par *"conditions peu limitantes",* on entend par exemple les conditions d'environnement rencontrées dans les essais agronomiques en micro-parcelles ou dans les essais standards de référencement pratiqués par des instituts techniques agricoles au service des agriculteurs et des filières agricoles, comme par exemple l'institut technique Arvalis. Ce modèle écophysiologique est un programme informatique qui reproduit le comportement des plantes - dont leur rendement - en fonction de leurs conditions environnementales (sol et météorologie principalement). Il permet également de tester différentes densités de plantes, et donc de déterminer les densités optimales, c'est-à-dire celles qui permettent d'obtenir le meilleur rendement dans ces conditions environnementales données.

Pour augmenter sa fiabilité, le modèle écophysiologique mis en oeuvre dans le procédé selon l'invention est calibré à partir de données expérimentales, pour produire des variétés végétales virtuelles reproduisant au moins partiellement le comportement des variétés végétales réelles susceptibles d'être soumises au procédé selon l'invention.

Dans un mode particulier de mise en oeuvre, la simulation effectuée à l'aide de ce modèle écophysiologique est réalisée de la manière suivante :

- on met en oeuvre un modèle écophysiologique, par exemple tel que les modèles APSIM, DSSAT, STICS ou WOFOST abondamment décrits dans la littérature scientifique;
- on calibre ce modèle écophysiologique à partir de données expérimentales ;
- on produit à l'aide de ce modèle écophysiologique, pour la variété végétale considérée, les courbes de réponse du rendement en réaction à la densité, d'une part, dans des conditions environnementales très contrastées (de pluviométrie, de profondeur de sol et/ou de type de sol), et, d'autre part, en faisant varier la densité de semis des plantes simulées ;
- on détermine sur chacune de ces courbes de réponse la densité qui a permis d'obtenir le plus haut rendement possible en ces conditions environnementales;
- on établit une relation mathématique, de préférence la droite de régression linéaire de ces densités virtuellement optimales en fonction des rendements de culture pour la variété végétale considérée ;
- on mesure la pente de cette droite qui correspond au coefficient *a* de la relation DS = $b_m$ - [(*MaxPot*) - PR) * *a*] ;
- on détermine *MaxPot* (qui correspond au PR maximum donné par cette droite) et $b_m$ (qui est l'ordonnée de la droite à *MaxPot)* empiriquement sur la base d'expérimentations.

Au sens de l'invention, ces densités sont des "densités de semis virtuellement optimales", car ce sont des densités optimales déterminées à partir de simulations de conditions environnementales contrastées, pour ce qui est de leur capacité à générer du rendement : par exemple des années pluvieuses et des années sèches, des sols profonds et des sols superficiels, etc.

*a*, $b_m$, et *MaxPot* étant ainsi déterminés et connaissant par ailleurs PR à l'issue de l'étape (f), on calcule pour chaque zone de gestion ($Z_g$) de classe $C_k$, la densité de semis DS.

*Etape (i): élaboration de la carte de préconisation de DS sur la parcelle P*

Dans cette étape (i), on affecte les densités de semis DS calculées à l'étape (h) aux zones de gestion ($Z_g$) de classe $C_k$ correspondante sur la parcelle P telle qu'elle est issue des étapes précédentes.

On produit ainsi une carte de préconisation donnant les densités de semis DS pour toutes les zones de gestion ($Z_g$) de la parcelle P, qui peut donner lieu à au moins une représentation cartographique de P, avec DS comme marqueur.

*Etape (j): semis de la variété végétale sur la parcelle P*

Selon un mode préféré de mise en oeuvre de cette étape (j), les informations de densités de semis DS variables, localisés sur la parcelle P et contenues dans la carte de préconisation produite à l'étape (i), sont communiquées à un dispositif semoir qui est asservi un programme informatique de commande de la délivrance d'une quantité de semis en adéquation avec la DS préconisée pour chaque zone de gestion ($Z_g$).

En pratique, dans ce mode préféré de mise en oeuvre de l'étape (j), une version numérique de la carte de préconisation de DS produite à l'étape (i) est transmise au dispositif-semoir automatisé géolocalisable et équipé de moyens informatiques pour lire cette carte numérique et pour effectuer le semis de la variété végétale considérée sur la parcelle P, en se conformant à la carte de préconisation de DS.

Cette opération de semis comprend la géolocalisation du dispositif semoir. Cette géolocalisation est prise en compte par le programme informatique de commande de la délivrance de la quantité de semences adéquate, pour faire correspondre cette délivrance à la localisation du dispositif semoir sur la parcelle P au cours du semis.

-II- Procédé d'élaboration d'une carte de préconisation de densités de semis sur une parcelle P pour augmenter la productivité de cette parcelle P

La présente invention concerne également un procédé qui est un sous-ensemble du procédé pour augmenter la productivité d'une parcelle P agricole.

Ce procédé permet l'élaboration d'une carte de densités de semis sur une parcelle P pour augmenter sa productivité.

Ce procédé est caractérisé en ce qu'il comprend les étapes (a), (b), (c), (e) à (h), et, de préférence l'étape (d).

-III- Dispositifs pour la mise en oeuvre des procédés -I- & -II- selon l'invention

Ces dispositifs sont des moyens de type hardware ou software. Ce sont des accessoires des procédés -I- & -II- selon l'invention tels que décrits dans le présent exposé.

Il peut s'agir notamment de :

- d'un support de stockage non transitoire lisible par ordinateur, stockant au moins une version numérique d'au moins une carte de préconisation de DS pour une parcelle P, ladite carte étant telle que produite à l'étape (i) du procédé selon l'invention.

  Ce support de stockage peut-être compris dans un serveur délocalisé accessible à distance par Internet ou peut-être encore une carte SD, une clé USB...
  Ce support de stockage peut inclure lui-même un programme d'ordinateur pour la mise en oeuvre du procédé selon l'invention ou bien encore contenir seulement les fichiers de la version numérique de la carte de préconisation de DS.

- d'un programme d'ordinateur comprenant une série d'instructions qui, lorsqu'elles sont exécutées par un processeur, mettent en oeuvre un procédé selon l'invention.

- d'un support de stockage non transitoire lisible par ordinateur, stockant un programme d'ordinateur comprenant une série d'instructions qui, lorsqu'elles sont exécutées par un processeur, mettent en oeuvre un procédé selon l'invention.
  Ce support de stockage peut-être compris dans un serveur délocalisé accessible à distance par Internet ou peut-être encore une carte SD, une clé USB...

- d'un dispositif-semoir automatisé géolocalisable et équipé pour lire une carte numérique de préconisation de DS produite à l'étape (i) du procédé selon l'invention.

  Il est ici question de la machine agricole industrielle comportant des moyens mécaniques pour délivrer les semences ainsi que des moyens de commande assistée par ordinateur de la délivrance de ces semis dans les champs de culture.
  Conformément à l'invention, ce dispositif semoir comprend également des moyens de lecture de la carte de préconisation de DS, associés, d'une part, aux moyens de commande de la délivrance des semis pour l'exécution du semis conformément à la carte de préconisation de DS, et, d'autre part, à une unité de géolocalisation du dispositif semoir, à laquelle sont asservis les moyens de commande de la délivrance des semences.
  Ces moyens de lecture de la carte de préconisation de DS et cette unité de géolocalisation constituent un module informatique qui forme un autre objet de l'invention (cf. infra).

- ou d'un module informatique inclus ou susceptible d'être inclus dans le dispositif-semoir selon l'invention et permettant la géolocalisation dudit dispositif-semoir et le semis d'une variété végétale de l'espèce donnée sur une parcelle P en se conformant à une carte numérique de préconisation de DS produite à l'étape (i) du procédé selon l'invention.

-IV- EXEMPLES

Les exemples qui suivent permettent de mieux comprendre l'invention, d'en faire ressortir tous les avantages et variantes de mise en oeuvre ou de réalisation.

Descriptif des figures

La figure 1 est une vue aérienne de la parcelle P destinée à être ensemencée conformément au procédé selon l'invention.

La figure 2 montre trois cartes de résistivités électriques géoréférencées et mesurées sur la parcelle P à trois profondeurs : voie 1 entre 0 et 50 cm, voie 2 entre 0 et 100 cm, voie 3 entre 0 et 170 cm.

La figure 3A montre une carte de données topographiques : altitudes centrées géoréférencées et mesurées sur la parcelle P, par GPS/RTK.

La figure 3B montre une carte de données topographiques : pentes géoréférencées et mesurées sur la parcelle P, par GPS.

La figure 4A montre une carte de rendement brut (T/ha) en 2016 pour la parcelle P cultivée avec la variété végétale ADVANTA SHELBEY de l'espèce végétale MAÏS.

La figure 4B montre de la figure 4A nettoyée par une méthode automatisée.

La figure 5 montre 6 cartes de la parcelle P représentant le NDVI calculé à partir des images brutes satellites à plusieurs dates successives.

La figure 6 montre la carte des zones de gestion ($Z_g$) de P, d'une part, compilée à partir des cartes des figures 2, 3A & 3B et, d'autre part, classifiée selon quatre classes de zones de gestion de données géophysiques /topographiques.

La figure 7 montre la carte de la figure 6 après lissage des zones de gestion ($Z_g$) trop restreintes.

La figure 8 montre la carte des zones de gestion ($Z_g$) de P, d'une part, obtenu à partir de la carte de la figure 4B et, d'autre part, classifiée selon quatre classes de zones de gestion de rendements historiques.

La figure 9 montre la carte de la figure 8 après lissage des zones de gestion ($Z_g$) trop restreintes.

La figure 10 montre la carte des zones de gestion ($Z_g$) de P, d'une part, compilée à partir des 6 cartes de la figure 5 et, d'autre part, classifiée selon quatre classes de zones de gestion de NDVI.

La figure 11 montre la carte de la figure 10 après lissage des zones de gestion ($Z_g$) trop restreintes.

La figure 12 montre la carte des zones de gestion ($Z_g$) de P, d'une part, compilée à partir des cartes des figures 11 et 5, d'autre part, classifiée selon quatre classes de zones de gestion de l'indice adimensionnel de productivité IPA.

La figure 13 montre la carte de la figure 12 dans laquelle l'IPA a été transformée en potentiel de rendement (PR) à l'aide d'une fonction mathématique synthétique intégrant le potentiel de rendement sur P (PRP), issu d'une moyenne des rendements historiques sur P pour l'espèce considérée.

La figure 14 est une représentation des droites de régression linéaire de densités de semis (kiloplantes/ha) optimales en fonction du rendement (T/ha), obtenues par simulation de 1500 conditions environnementales différentes pour deux variétés virtuelles différentes : une variété (i) précoce et une variété (j) tardive.

La figure 15 est la carte de préconisation de densités de semis sur la parcelle P pour la variété végétale ADVANTA SHELBEY de l'espèce végétale MAÏS, obtenue à l'issue de l'étape (h) du procédé selon invention.

Les figures 16 et 17 représentent la parcelle P d'un essai comparatif réalisé conformément à l'exemple 2 ci-après.

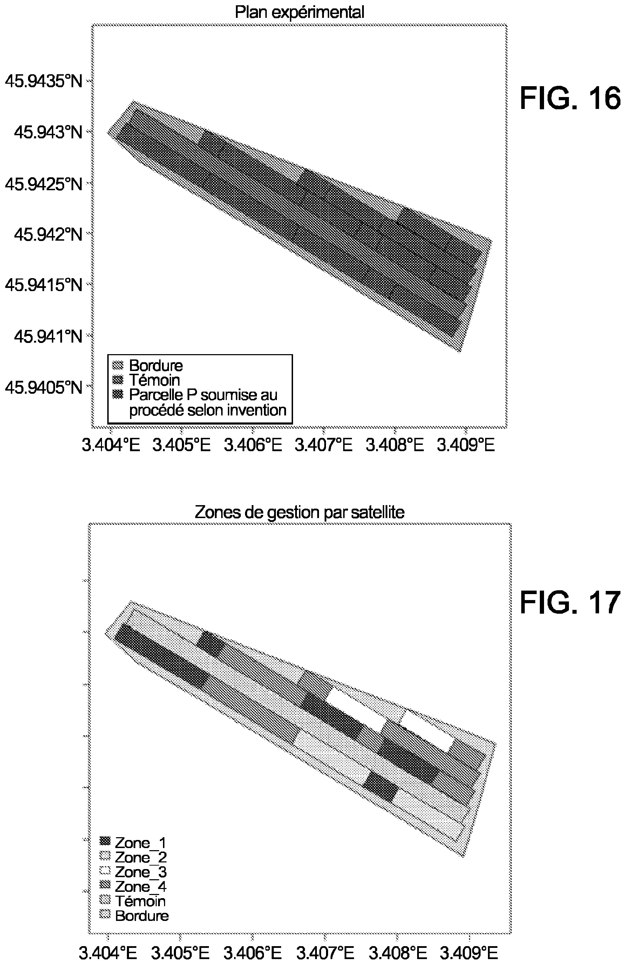

La figure 16 fait apparaître la bande témoin centrale bordée par les zones d'essai conformément à l'invention. La figure 17 montre la bande témoin centrale bordée par les zones d'essai découpées en zones de gestion et classifiées en quatre classes, conformément à l'invention.

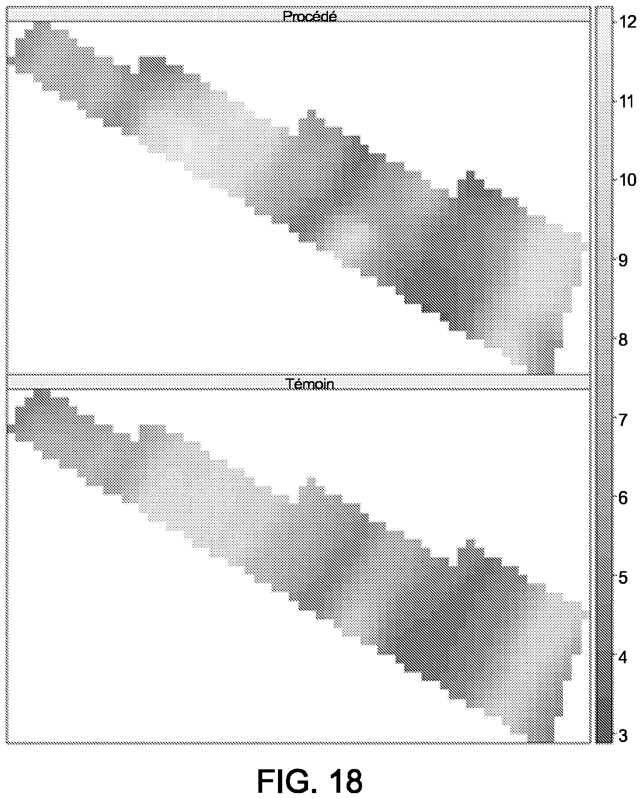

La figure 18 est une interprétation des modalités expérimentales en utilisant un modèle de régression spatialisée élaboré à partir de la carte des rendements de la parcelle P et du plan expérimental de semis:

Carte (en haut à gauche) Interpolation par le modèle de régression spatialisée sur la parcelle P de l'effet du traitement sur le rendement.

Carte (en bas à gauche) pour le témoin Interpolation par le modèle de régression spatialisée sur la parcelle P de l'effet du témoin sur le rendement.

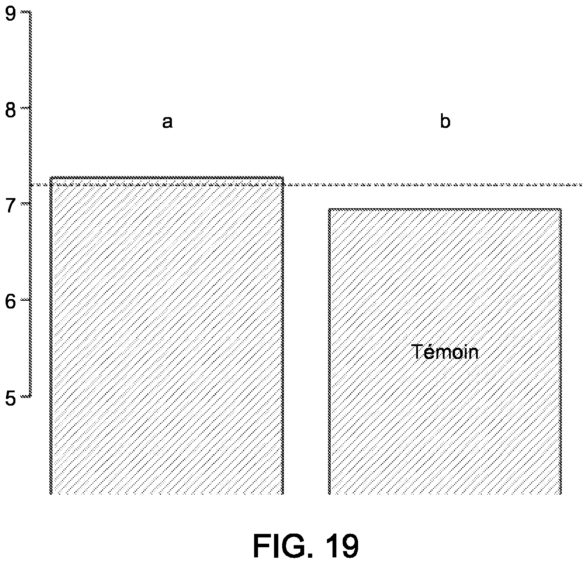

La figure 19 montre, sous forme d'histogramme, le gain en rendement obtenu pour la zone de la parcelle ensemencée conformément à l'invention par rapport au témoin.

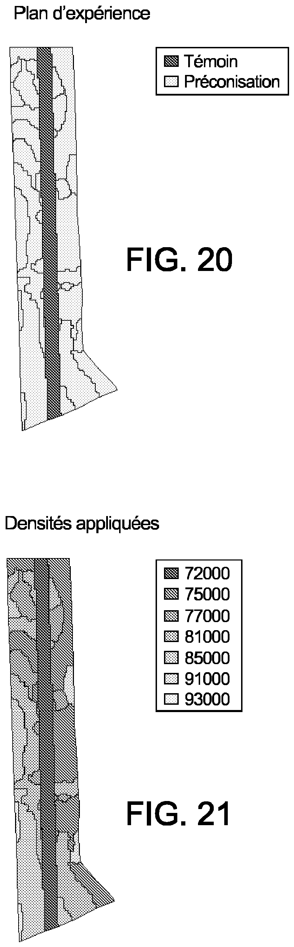

Les figures 20 et 21 représentent une parcelle P2 d'un essai comparatif réalisé conformément à l'exemple 3 ci-après. La figure 20 fait apparaître la bande témoin centrale bordée par les zones d'essai conformément à l'invention.

La figure 21 montre la bande témoin centrale bordée par les zones d'essai découpées en zones de gestion et classifiées en six classes, conformément à l'invention.

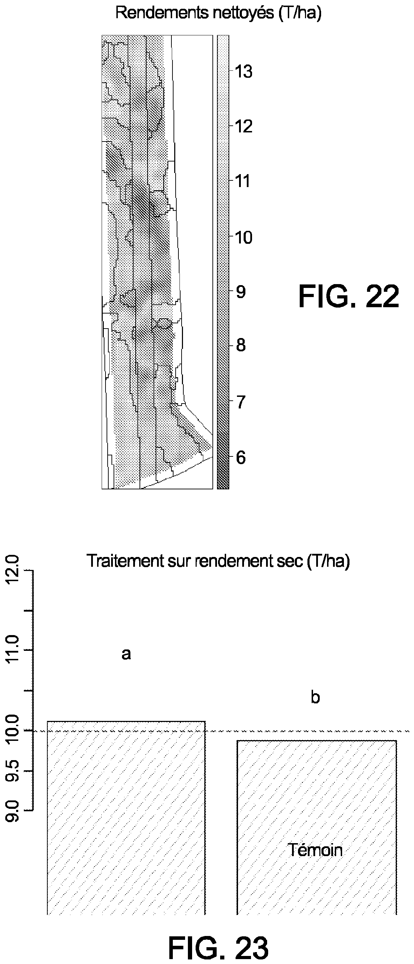

La figure 22 est la carte de rendements nettoyée obtenue à la récolte 2017.

La figure 23 montre, sous forme d'histogramme, le gain en rendement obtenu pour la zone de la parcelle ensemencée conformément à l'invention par rapport au témoin.

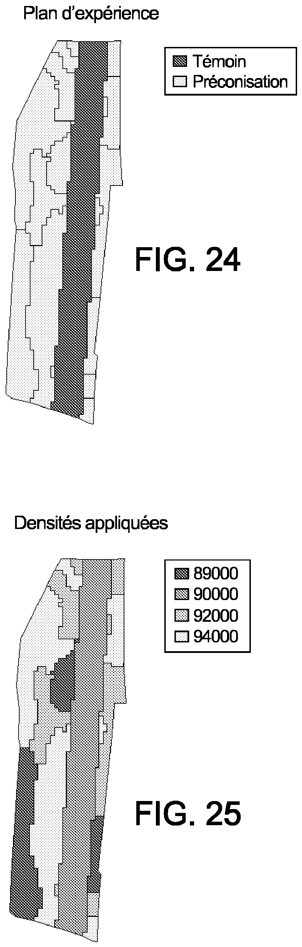

Les figures 24 et 25 représentent une parcelle P3 d'un essai comparatif réalisé conformément à l'exemple 4 ci-après. La figure 24 fait apparaître la bande témoin centrale bordée par les zones d'essai conformément à l'invention.

La figure 25 montre la bande témoin centrale bordée par les zones d'essai découpées en zones de gestion et classifiées en 3 classes, conformément à l'invention.

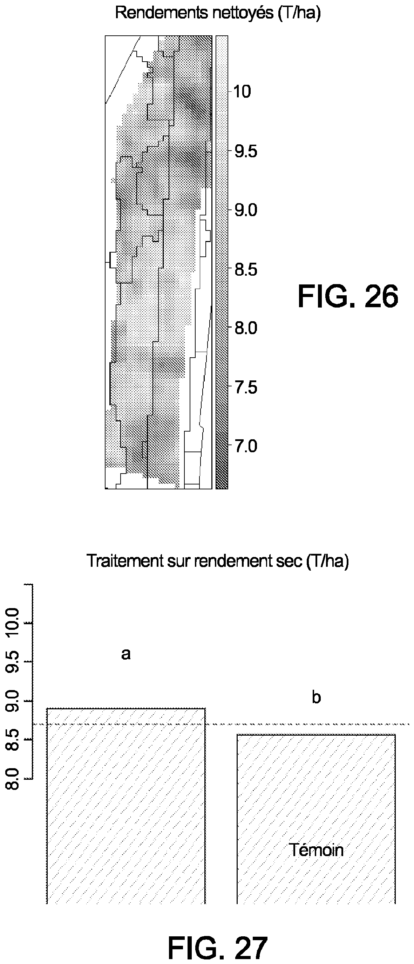

La figure 26 est la carte de rendements nettoyée obtenue à la récolte 2017.

La figure 27 montre, sous forme d'histogramme, le gain en rendement obtenu pour la zone de la parcelle ensemencée conformément à l'invention par rapport au témoin.

EXEMPLE 1

L'exemple est un essai de semis et de culture de la variété végétale ADVANTA SHELBEY appartenant à l'espèce végétale MAÏS, sur une parcelle P agricole située à Maringues, Puy-de-Dôme, France.

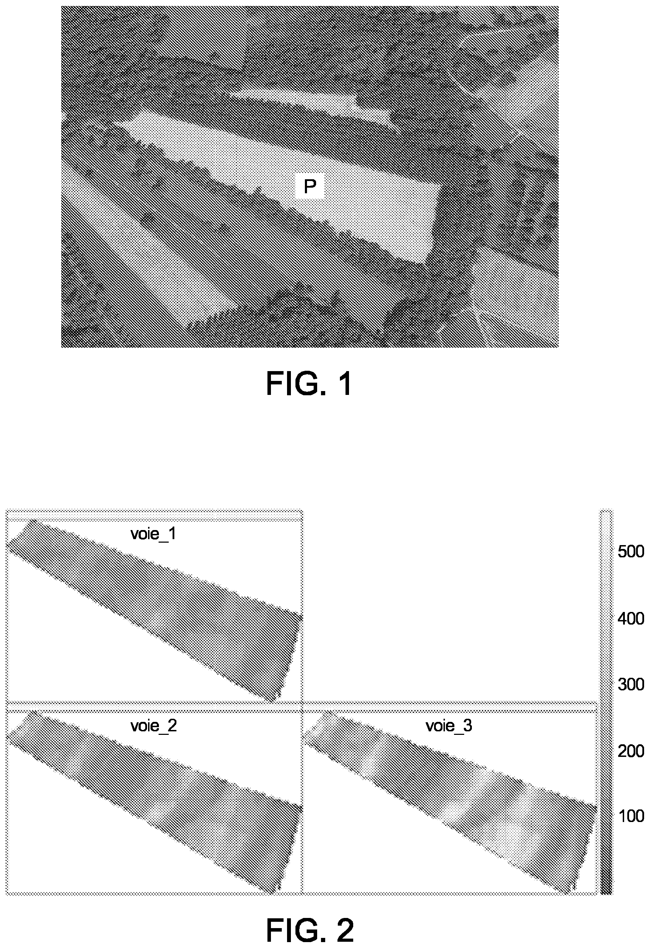

La figure 1 montre une photographie par satellite de la parcelle P de l'essai **x**

*Etape (a): Collecte des données de type(s) Tn*

Dans cet essai, les données de type Tn sont les données suivantes :

T1. des données géophysiques de P, à savoir la résistivité électrique ($\Omega$.m) réalisée sur trois profondeurs (0-50 cm, 0-100 m et 0-170 cm) du sol de la parcelle et à plusieurs endroits de la parcelle;

T2. des données topographiques de P, à savoir altitude centrée et pente de la parcelle P, acquises en utilisant un GPS RTK (Global Positionning System, Real Time Kinematic);

T3. un historique de cartes de rendement géoréférencées P;

T4. des indicateurs de biomasse de P obtenus par imagerie aérienne, de préférence Normalized Différence Vegetation Index (NDVI).

*Etape (b): regroupement des différentes données de type(s) Tn=1 à 4 une grille*

La grille de regroupement des différentes données de type(s) Tn=1 à 4, est générée à partir du contour de la parcelle. La distance entre chaque point de grille est de 5 m.

Les données T1 de l'exemple appartiennent à 3 sous-ensembles : $T1^1$, $T1^2$, $T1^3$. Les 3 sous-ensembles correspondent à des mesures de la résistivité de la parcelle P, à différents emplacements, et à 3 profondeurs (voies 1 à 3), respectivement 0 - 50cm, 0 - 100 cm et 0 - 170 cm.

Les données de chaque sous-ensemble $T1^1$, $T1^2$, $T1^3$ sont superposées sur la grille géoréférencée par interpolation géostatistique.

La figure 2 montre les images réelles des grilles obtenues à partir des données $T1^1$, $T1^2$, $T1^3$ reflétant la résistivité de la parcelle P. Ces images montrent les valeurs de la résistivité, à 3 profondeurs, mesurée sur toute l'étendue de P. Ces valeurs sont matérialisées par un gradient de contraste noir et blanc variant de 0 à plus de 500 $\Omega$.m.

La correspondance entre ce gradient et les valeurs de résistivité en $\Omega$.m est donnée sur la barre verticale à droite de la figure 2.

Les données T2 de l'exemple appartiennent à 2 sous-ensembles : $T2^1$, $T2^2$. Les 2 sous-ensembles correspondent à des mesures de valeurs de l'altitude en mètres obtenues avec le GPS RTK sur toute l'étendue de P (ces données étant centrées pour être ramenées à une moyenne de 0) et de la pente en degré calculée à partir des données d'altitude.

Les données de chaque sous-ensemble $T2^1$, $T2^2$ sont superposées sur la grille géoréférencée par interpolation géostatistique.

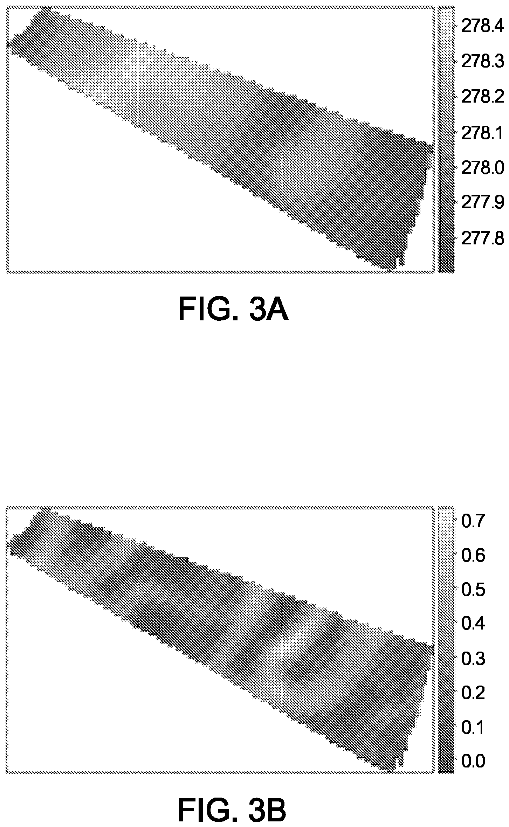

Ces valeurs d'altitude centrée sont matérialisées par un gradient de contraste noir et blanc variant de 277 m à 279 m sur la figure 3A. La correspondance entre ce gradient et les valeurs de l'altitude centrée en mètres, sont données sur la barre verticale à droite de la figure 3A.

Ces valeurs de pente sont matérialisées par un gradient de contraste noir et blanc variant de 0° à 0,7° sur la figure 3B. La correspondance entre ce gradient et les valeurs angulaires de pente en degrés, sont données sur la barre verticale à droite de la figure 3B.

Les données T3 sont constituées par les rendements historiques moyens géoréférencés de la parcelle P, calculés sur les années 2016-2015-2014, pour la variété végétale ADVANTA SHELBEY appartenant à l'espèce végétale MAÏS. Ces rendements sont déterminés à de multiples emplacements de la parcelle P, lors de la récolte au moyen d'une moissonneuse équipée d'un capteur de rendement. Ces rendements (données T3) sont superposés sur la grille géoréférencée par interpolation géostatistique.

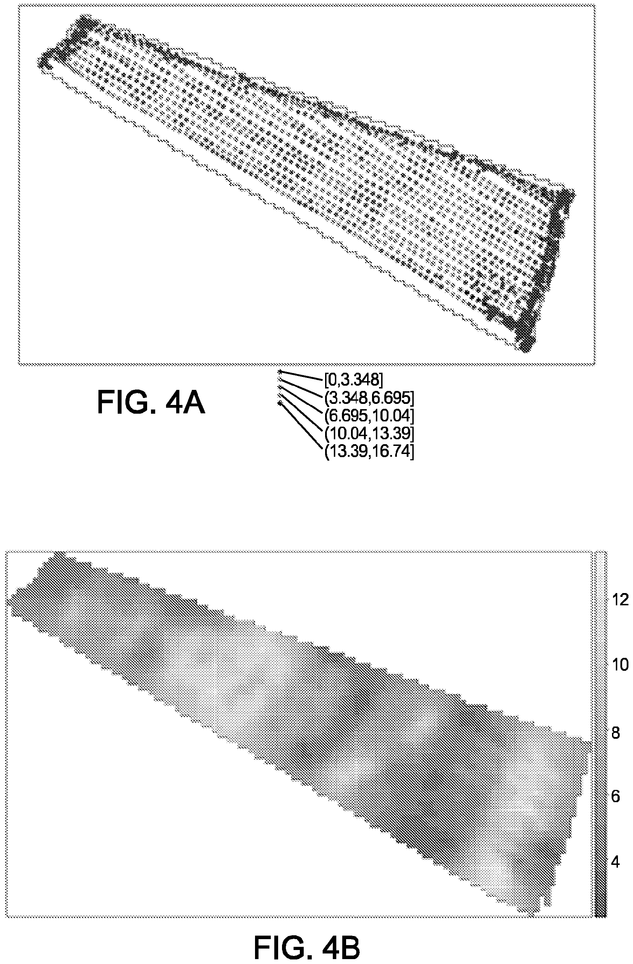

La figure 4A montre la carte de distribution sur P, des rendements historiques moyens calculés sur les 3 années 2016-2015-2014 et matérialisés par un gradient de contraste noir et blanc correspondant à cinq intervalles de rendements (voir la légende sur la figure 4A).

Une méthode automatisée de nettoyage des données T3 de rendements historiques permet de nettoyer la carte de ses aberrations. Il peut s'agir par exemple de la méthode définie dans *"Yield editor - naldc.nal.usda.gov/download/14697/PDF".*

La figure 4B montre les rendements nettoyés, matérialisés par un gradient de couleur ou de contraste noir et blanc correspondant à cinq intervalles de rendements (voir la légende sur la figure 4B).

Les données T4 sont des cartes de la parcelle P issues d'images satellites représentant l'indicateur de biomasse (Normalized Difference Vegetation Index) NDVI calculé à partir des images satellites brutes. De telles cartes sont distribuées par exemple par l'European Space Agency ou la société Airbus Defence and Space ou autre. Dans cet exemple, on utilise celle de la société Airbus Defence.

Un historique d'images satellites NDVI est choisi en fonction des précédents culturaux de la parcelle P. Au moins quatre images collectées sur trois années au minimum sont utilisées pour la définition des zones de gestion ($Z_g$).

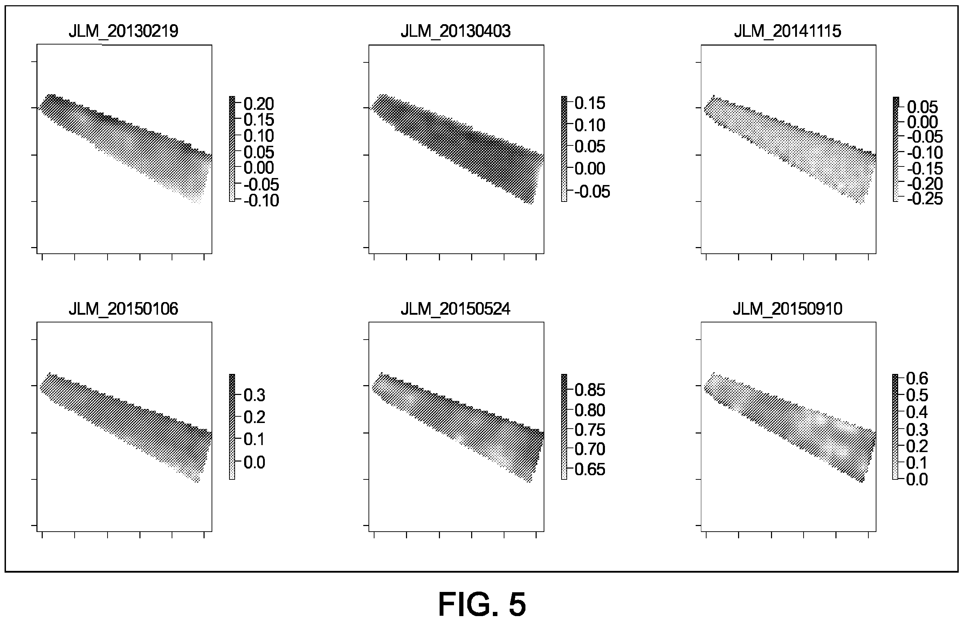

La figure 5 annexée montre six images NDVI de la parcelle P respectivement datés du 19 2013 du 3/4/2013 du 15/11/2014 du 6/1/2015 du 24/5/2015 et du 10/9/2015. Ces 6 dates ont été choisies selon des critères agronomiques et de disponibilité des images. Les valeurs de NDVI sont matérialisées par un gradient de contraste noir et blanc sur les images de la figure 5. La correspondance entre ce gradient et les valeurs de NDVI, est donnée sur la barre verticale à droite de chaque image de la figure 5.

Afin de limiter les effets de bordure, une zone tampon (buffer) est retirée des images pour leur interprétation.

*Etape (c): décomposition de P en différentes zones de gestion*

Les données $T1^1$, $T1^2$, $T1^3$ de résistivité électrique de P à profondeur 0-50 cm, 0-100 cm et 0-170 cm, ainsi que les données T2 topographiques d'altitude centrée $T2^1$ et de pente $T2^2$ de la parcelle P, telles qu'elles figurent sur les images montrées sur les figures 2, 3A et 3B, sont interpolées par krigeage ordinaire, sur la grille décrivant un maillage régulier à l'intérieur de la parcelle P.

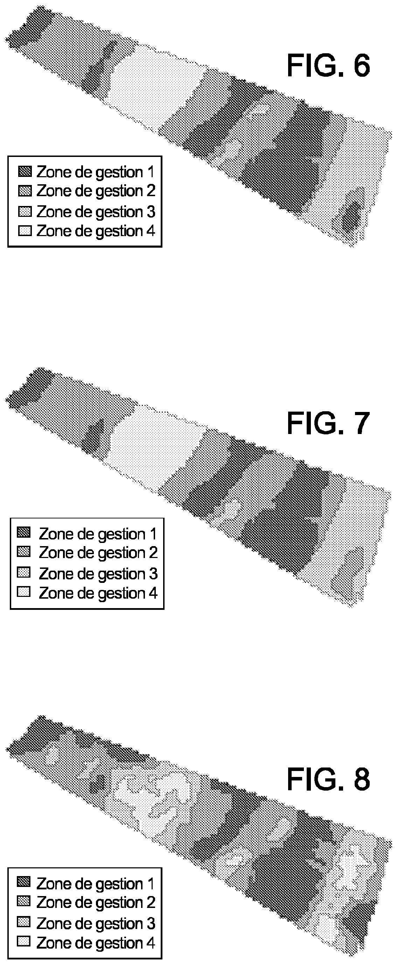

On dispose alors d'une carte de la parcelle P faisant apparaître plusieurs zones de gestion ($Z_g$), en l'espèce 15 ($Z_g$) comme montré sur la figure 6. Chacune des ($Z_g$) est associée à une valeur de classe $C_{k=1 \text{ à } 4}$.

Ces classes sont respectivement désignées par C1 : zone de gestion 1, C2 : zone de gestion 2 , C3: zone de gestion 3, C4: zone de gestion 4 sur la figure 6. Ainsi, les 15 zones de gestion ($Z_g$) correspondent chacune à une classe $C_{k=1}$, $C_{k=2}$, $C_{k=3}$ ou $C_{k=4}$ , ayant chacune une valeur de variable arbitraire cumulée donnée par un niveau de gris sur la figure 6.

Les données T3 de rendements historiques de la parcelle P, telles qu'elles figurent sur l'image montrée sur la figure 4B, sont interpolées par une méthode géostatistique de krigeage ordinaire, sur une grille de regroupement sur P telle que définie ci-dessus.

On dispose alors d'une image de la parcelle P faisant apparaître plusieurs zones de gestion ($Z_g$), en l'espèce 23 ($Z_g$) comme montré sur la figure 8. Ces 23 Zg correspondent chacune à une classe $C_{k=1}$, $C_{k=2}$, $C_{k=3}$ ou $C_{k=4}$ , ayant chacune une valeur de rendement donnée par un niveau de gris sur la figure 8.

Les données T4 de NDVI de la parcelle P, telles qu'elles figurent sur les 6 images montrées sur la figure 5, sont interpolées sur une grille de regroupement sur P telle que définie ci-dessus, par la méthode géostatistique de krigeage ordinaire.

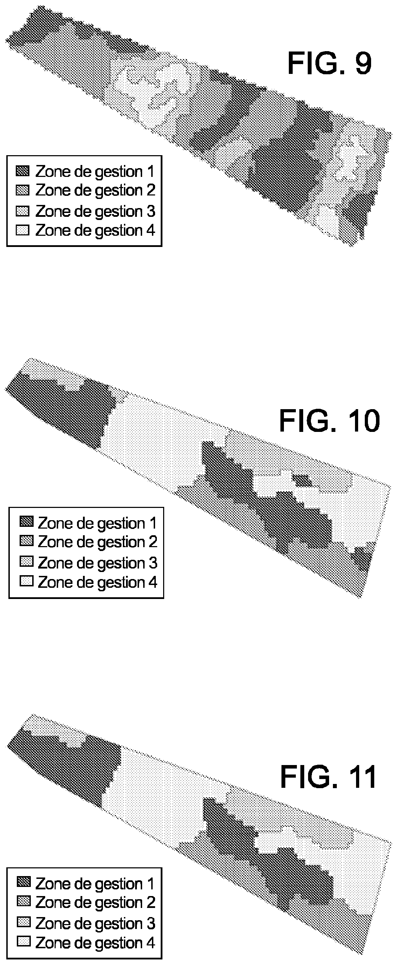

On dispose alors d'une image de la parcelle P faisant apparaître plusieurs zones de gestion ($Z_g$), en l'espèce 11 ($Z_g$) comme montré sur la figure 10, caractérisées par l'IPA. Les valeurs de cette variable diffèrent dans les différentes zones de gestion ($Z_g$). Dans le présent exemple, on distingue quatre valeurs différentes que l'on fait correspondre chacune à une classe $C_{k=1}$, $C_{k=2}$, $C_{k=3}$, $C_{k=4}$. Ces classes sont respectivement désignées par zone de gestion 1, zone de gestion 2 , zone de gestion 3, zone de gestion 4 sur la figure 10. Ainsi, les 11 zones de gestion ($Z_g$) sont regroupées en quatre classes $C_{k=1}$, $C_{k=2}$, $C_{k=3}$, $C_{k=4}$ ayant chacune une valeur de variable arbitraire cumulée donnée par un niveau de gris sur la figure 10.

*Etape (d): lissage*

Parmi les 15 zones de gestion ($Z_g$) appartenant à quatre classes de la carte de P selon la figure 6, certaines d'entre elles ont des surfaces réduites qui sont parfois isolées au sein d'une zone de gestion de classes différente.

Les zones de gestion ($Z_g$) dont la surface est réduite en deçà d'une limite L sont éliminées car il n'est pas possible de réaliser un apport d'intrants, en l'occurrence en l'espèce le semis dont la densité est modulée, sur de telles petites surfaces, pour des raisons de dimensionnement des semoirs. Ainsi, par une méthode de lissage consistant par exemple à 1) Vectoriser la grille de points 2) Eliminer les surfaces inférieures à « L » 3) Réaffecter les valeurs sur la grille 4) Convertir les niveaux de facteurs en un tableau de contingence 5) interpréter la probabilité d'appartenance à une classe par krigeage ordinaire du tableau de contingence 6) Ré-affecter les classes sur les zones éliminées en affectant la classe la plus probable. Les zones de gestion ($Z_g$) de surface inférieure à L = 500 m$^2$ , à l'échelle 1 sur la parcelle, sont supprimées.

La figure 7 montre la classification des zones de gestion ($Z_g$) après ce lissage de la carte de la figure 6.

On procède de même pour les zones de gestion ($Z_g$) appartenant à quatre classes de la carte de P selon les figures 8 et 10.

Les figures 9 & 11 montrent respectivement la classification des zones de gestion après ce lissage des cartes des figures 8 et 10.

*Etape (e): Indice de Productivité Adimensionnel (IPA)*

L'image comprenant les zones de gestion ($Z_g$) obtenue à partir des données T4, est soumise à une transformation centrée réduite des données T4.

Pour chaque image sur laquelle un buffer a été retiré pour l'analyse, les valeurs d'index (NDVI) sont centrées réduites : Pour une image T4i, $\mu_i$ est définie comme l'espérance des données de T4i et $\sigma_i$ l'écart-type des données de T4i.

Soit j désignant une donnée de l'image T4i

Soit l'indice k indiquant la classe pour laquelle l'IPA est calculé.

Les données $T4_{ij}$ des images $T4_i$ sont centrées-réduites : $T4_{ij}\,cr = (T4_{ij} - \mu_i)/\sigma i$.

« m » représente le nombre total d'images

« n » le nombre total de données toutes images confondues

« nk » désigne le nombre de données appartenant à la classe k.

L'IPA est calculé en chaque point j comme suit :

$$IPA_k = \left(\sum_{ij}^{nk}(T4_{ij})\right)/n \;+\; \sum_{i}^{m}\left(\frac{\sum_{j\in k}^{nk}(T4_{ij}\,cr)}{nk}\right)_i /m \cdot max(\sigma i)$$

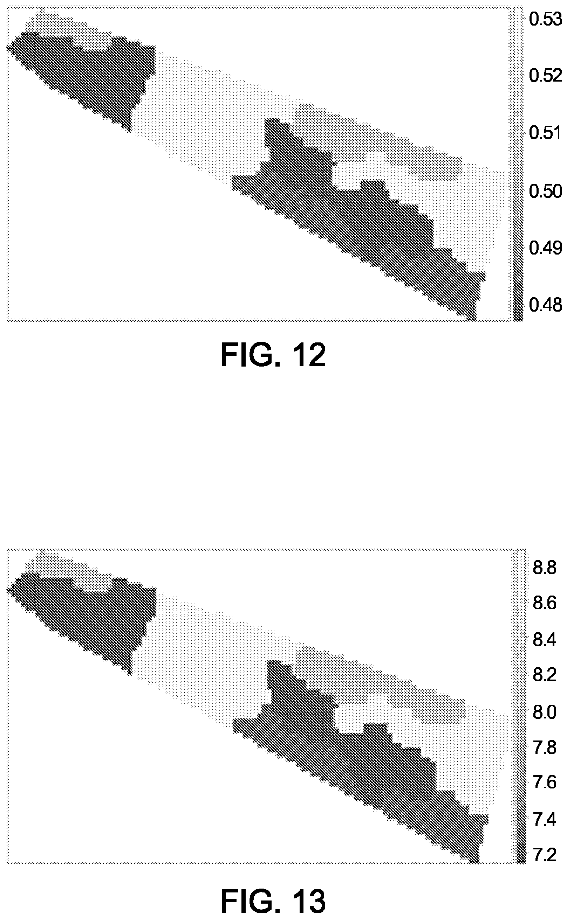

Les IPA des classes $C_{k=1}$, $C_{k=2}$, $C_{k=3}$, $C_{k=4}$ des zones de gestion ($Z_g$) de P, sont ensuite traités comme suit pour obtenir une seule carte ou image de P montrée sur la figure 12. Les IPA sont donnés sur la figure 12 par un niveau de gris et les correspondances entre les niveaux de gris et les valeurs de l'IPA sont données sur la barre verticale à droite de la figure 12.

La compilation des IPA des classes $C_{k=1}$, $C_{k=2}$, $C_{k=3}$, $C_{k=4}$ des zones de gestion ($Z_g$) de ces trois images de P, est composée de :

- deux zones de gestion de classes $C_{k=1}$ dont l'IPA est de 0,48
- une zone de gestion de classes $C_{k=2}$ dont l'IPA, proche de 0,48 justifie le regroupement avec $C_{k=1}$
- deux zones de gestion de classes $C_{k=3}$ dont l'IPA est de 0,506
- deux zones de gestion de classes $C_{k=4}$ dont l'IPA est de 0,525

*Etape (f): Potentiel de Rendement sur P (PRP) de l'espèce considérée*

En l'espèce, l'agriculteur exploitant cette parcelle P a chiffré le potentiel de rendement sur celle-ci (PRP), pour l'espèce végétale Maïs, en estimant la moyenne des rendements pour cette espèce. Le PRP est de 8 T/ha.

*Etape (g): Calcul du Potentiel de Rendement (PR)*

Soit $\mu$ la moyenne arithmétique des valeurs d'IPA sur la parcelle. En chaque point j de la parcelle, la valeur de PRj est calculée comme suit :

$$PR_j - PRP * \left(1 + \frac{IPA_j \quad \mu}{\mu}\right)$$

L'IPA de 0,48 des deux zones de gestion de classes $C_{k=1}$ donne un PR de 7,2.

L'IPA de 0,506 des deux zones de gestion de classes $C_{k=3}$ donne un PR de 7,9.

L'IPA de 0,525 des deux zones de gestion de classes $C_{k=4}$ donne un PR de 8,8.

Ces potentiels de rendement PR sont reportés sur la figure 13 pour chaque zone de gestion de classes C1, C2, C3, avec une échelle par contraste de gris. La correspondance entre les valeurs de PR et niveau de gris est donnée par la barre verticale à droite de la figure 13.

*Etape (h): détermination de la densité de semis (DS)*

Dans cette étape, une densité de semis DS est attribuée à chaque zone de gestion (Zg), et ce en fonction du potentiel de rendement déterminé dans les étapes précédentes, à partir d'une relation mathématique linéaire propre à la variété végétale concernée ADVANTA SHELBEY. Cette relation Rendement-Densité est formalisée comme suit :

$$\text{Densité de Semis} = b_m - (\,(MaxPot - \text{Potentiel de Rendement}) \times a)$$

où *a* est la pente de la droite de régression et *bm* l'ordonnée au potentiel de rendement *MaxPot.*

Obtention des coefficients de régression *a*, *MaxPot* et $b_m$

Coefficient *a*

Le coefficient *a* traduit le nombre de plantes auquel doit correspondre une différence unitaire du potentiel de rendement. En d'autres termes, si *a*=3 kpl/t alors une différence de 1 t/ha du potentiel de rendement se traduit par une différence de densité de plantes de 3000 plantes par hectare.

Dans le présent exemple, cette relation entre le potentiel de rendement PR de la variété végétale concernée ADVANTA SHELBEY et la densité optimale associée est déterminée à partir de simulations d'un modèle écophysiologique (programme informatique qui reproduit le comportement des plantes en fonction de leurs conditions environnementales (sol et météorologie principalement)). Le modèle écophysiologique utilisé en l'espèce le modèle MaizGro, tel que disponible dans le package « BioCro » du Logiciel R, en conjonction avec les données météorologiques historiques (1980-2010) publiées par le département MERRA de la NASA.

Dans le cas présent, le modèle écophysiologique est calibré à partir de données expérimentales collectées par des essais réalisés par la déposante. Cette calibration permet d'obtenir des « variétés virtuelles » reproduisant au moins partiellement le comportement des variétés génétiques réelles commercialisées.

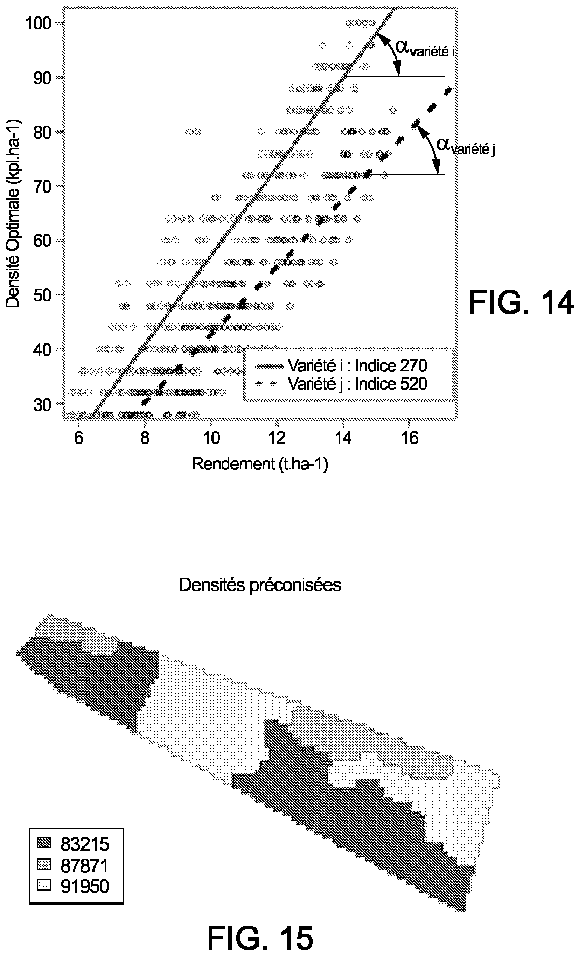

Les lois de réponse Rendement-Densité de ces variétés virtuelles sont ensuite obtenues par simulation : en soumettant ces variétés virtuelles à des conditions environnementales contrastées pour ce qui est de leur capacité à générer du rendement (année pluvieuse ou au contraire année sèche, sol profond ou au contraire sol superficiel, etc), et en faisant varier la densité des plantes simulées, la densité la plus adaptée à chaque potentiel de rendement peut être calculée (Figure 14 annexée). Le coefficient *a* de la variété considérée est ensuite extrait comme la pente de la droite de régression de ces densités virtuellement optimales en fonction des potentiels de rendement simulés.

La pente de la droite de régression linéaire pour la variété i, c'est-à-dire le coefficient *a,* est estimé dans ce cas à environ 5800 plantes/t.

Coefficients *MaxPot* et $b_m$

*MaxPot* correspond au potentiel de rendement considéré comme normalement atteignable lorsque les conditions environnementales sont aussi peu limitantes que les conditions rencontrées dans les essais agronomiques.

$b_m$ correspond à la densité de plantes qui permet d'effectivement atteindre *MaxPot* dans ces conditions peu limitantes, pour la variété en question.

MaxPot et $b_m$ sont mesurés à partir d'expérimentations spécifiques.

En l'espèce, *MaxPot* = 11,5 est obtenu comme le rendement maximal moyen observé pour les variétés de ce créneau de précocité dans les expérimentations de référence d'Arvalis.

En l'espèce, *bm* = 108 est obtenu sur la base d'expérimentations menées par la déposante.

*Etape (i): élaboration de la carte de préconisation de DS sur la parcelle P*

L'IPA de 0,48 des deux zones de gestion de classes $C_{k=1}$ donne un PR de 7,2.

$$DS = [108 - (11,5 - 7,2)5,8] = 83,815$$

L'IPA de 0,506 des deux zones de gestion de classes $C_{k=3}$ donne un PR de 7,9.

$$DS = [108 - (11,5 - 7,9)5,8] = 87,871$$

L'IPA de 0,525 des deux zones de gestion de classes $C_{k=4}$ donne un PR de 8,7.

$$DS = [108 - (11,5 - 8,7)5,8] = 91.950$$

Avec 3 classes comprenant chacune deux zones de gestion aux rendements de l'ordre de 8.7 t/ha, 7.9 t/ha et 7.2 t/ha (Figure 13), les densités optimales obtenues sont respectivement de l'ordre de 92 000 plantes/ha, 88 000 plantes/ha et 83 000 plantes/ha (Figure 15).

*Etape (j): semis de la variété végétale sur la parcelle P*

La carte de la figure 15 de préconisation de densité de semis correspond à un fichier informatique qui est transmis et lu par le module informatique du dispositif semoir. Ce dernier comprend également un système de géolocalisation qui permettra de corréler la position sur la parcelle P du dispositif semoir avec la densité de semis DS préconisée conformément à la carte de la figure 15.

EXEMPLE 2

Un essai est réalisé sur la parcelle P avec la variété végétale j de l'espèce ADVANTA SHELBEY . La parcelle P concernée est montrée sur la figure 16.
Un témoin à densité constante DSt = 75 000 plantes/ha est semé au milieu de la parcelle, conformément à la pratique habituelle de l'agriculteur. (Figure 16)
On met en oeuvre le procédé selon l'invention conformément au mode opératoire de l'exemple 1.
Cela conduit à une carte de préconisation montrée sur la figure 17, dans laquelle on recense cinq zones de gestion de classe 1, 2 zones de gestion de classe 2, deux zones de gestion de classe 3, 7 zones de gestion de classe 4.
Les densités de semis correspondants aux classes un à quatre sont respectivement : DS1 = 83 000 plantes/ha, DS2 = 83 000 plantes/ha , DS3 = 88 000 plantes/ha , DS4 = 92 000 plantes/ha.
La figure 18 est une interprétation des modalités expérimentales en utilisant un modèle de régression spatialisée élaboré à partir de la carte des rendements de la parcelle P et du plan expérimental de semis:

- Carte (en haut à gauche) Interprétation par le modèle de régression spatialisée sur la parcelle P de l'effet du traitement sur le rendement.
- Carte (en bas à gauche) pour le témoin Interprétation par le modèle de régression spatialisée sur la parcelle P de l'effet du témoin sur le rendement.

La figure 19 montre un diagramme avec les barres d'histogramme (a) de la parcelle ensemencée conformément à la préconisation établie selon l'invention, et (b) du témoin. L'échelle en ordonnée est le rendement par hectare.
Le gain obtenu sur le rendement final de [P - bande témoin] par rapport à la bande témoin est de 5%.

EXEMPLE 3

Un essai est réalisé en 2017 sur une parcelle P2 localisée en Hongrie avec la variété végétale LG 30.369. Pour l'ensemble de la parcelle, on met en oeuvre le procédé selon l'invention conformément au mode opératoire de l'exemple 1. Un témoin à densité constante DSt = 72 000 plantes/ha est semé au milieu de la parcelle, conformément à la pratique habituelle de l'agriculteur. Le plan expérimental est décrit sur la figure 20. Cela conduit à une carte des densités appliquées présentée sur la figure 21.

La figure 22 présente la carte de rendement nettoyée obtenue à la récolte 2017. La carte est nettoyée du bruit et des données aberrantes, l'effet de dates de récolte différentes est pris en compte et les données nettoyées sont interpolées.

La figure 23 montre un diagramme avec les barres d'histogramme (a) de la parcelle ensemencée conformément à la préconisation établie selon l'invention, et (b) du témoin. L'échelle en ordonnée est le rendement par hectare.

Le gain obtenu sur le rendement final de [P - bande témoin] par rapport à la bande témoin est de 2,4%.

EXEMPLE 4

Un essai est réalisé en 2017 sur une parcelle P3 localisée en Bretagne avec la variété végétale LG 30.215. Pour l'ensemble de la parcelle, on met en oeuvre le procédé selon l'invention conformément au mode opératoire de l'exemple 1. Un témoin à densité constante DSt = 90 000 plantes/ha est semé au milieu de la parcelle, conformément à la pratique habituelle de l'agriculteur. Le plan expérimental est décrit sur la figure 24. Cela conduit à une carte des densités appliquées présentée sur la figure 25.

La figure 26 présente la carte de rendement nettoyée obtenue à la récolte 2017. La carte est nettoyée du bruit et des données aberrantes et les données nettoyées sont interpolées.

La figure 27 montre un diagramme avec les barres d'histogramme (a) de la parcelle ensemencée conformément à la préconisation établie selon l'invention, et (b) du témoin. L'échelle en ordonnée est le rendement par hectare.

Le gain obtenu sur le rendement final de [P - bande témoin] par rapport à la bande témoin est de 3,8%.

**Revendications**

1. Procédé, mis en oeuvre par ordinateur, pour augmenter la productivité d'une parcelle agricole (P) vis-à-vis d'une variété végétale d'une espèce donnée, consiste:

   a. à collecter des données géoréférencées sur P et qui rendent compte de la productivité de différentes zones de P; ces données appartenant à des types Tn (n=entier positif), constitués par:

   T1. des données géophysiques de P, de préférence conductivité/résistivité,
   T2. des données topographiques de P;
   T3. des cartes de rendements de P;
   T4. des indicateurs de la biomasse végétale produite sur P (indices de végétation) obtenus par imagerie aérienne, de préférence le Normalized Différence Vegetation Index (NDVI);

   b. à traiter ces données Tn pour les regrouper sur P en utilisant des méthodes géostatistiques appropriées;
   c. à décomposer P, pour tout ou partie des regroupements -de préférence pour chaque regroupement- obtenus à l'étape (b), en différentes zones de gestion ($Z_g$) et classifier ces différentes zones ($Z_g$) en différentes classes $C_{k\ (k=entier\ positif)}$, par classification automatique statistique;
   d. à regrouper les zones de gestion ($Z_g$) de P, de manière à supprimer les zones de gestion ($Z_g$) dont la surface ou la plus grande dimension, est inférieure à une limite (L) fixée par les contraintes techniques liées au matériel agricole et aux pratiques agricoles mis en oeuvre sur la parcelle P;
   e. à déterminer un Indice de Productivité Adimensionnel (IPA) pour chacune des classes $C_k$ affectées aux zones de gestion ($Z_g$) de P, en attribuant par pondération à chaque classe $C_k$, une valeur représentative de sa contribution à la productivité de la parcelle;
   f. à fixer un Potentiel de Rendement sur P (PRP) de l'espèce considérée à partir d'une moyenne des rendements historiques sur P pour l'espèce considérée;
   g. à calculer, à partir de l'IPA obtenu à l'étape (e) et du PRP obtenu à l'étape (f) et à l'aide d'une fonction mathématique donnée, le Potentiel de Rendement (PR) de l'espèce considérée, pour chacune des zones de gestion ($Z_g$);
   h. à déterminer une Densité de Semis (DS), pour la variété de l'espèce végétale considérée et pour chacune des classes $C_k$, à partir d'une relation mathématique donnant DS en fonction de PR et dont au moins une partie des constantes est obtenue sur la base de simulations produites à partir d'un modèle écophysiologique:

   ■ qui est calibré à partir de données expérimentales,
   ■ qui reproduit le comportement de la variété ou de l'espèce végétale considérée en fonction de conditions environnementales, de préférence sol/météorologie,
   ■ et qui permet, d'une part, de simuler les rendements de cette variété ou de cette espèce en fonction de différentes conditions environnementales et, d'autre part, de déterminer les densités de plantes optimales pour la variété considérée;

    i. à produire au moins une carte de P sur laquelle sont reportées les DS obtenues à l'étape (h) pour toutes les zones de gestion ($Z_g$), cette carte étant une carte de préconisation de DS;
    j. à semer la variété végétale considérée sur la parcelle P en se conformant à la carte de préconisation de DS de l'étape (i), avec un dispositif-semoir automatisé géolocalisable et équipé pour lire une carte numérique de préconisation de DS produite à l'étape (i) du procédé.

2. Procédé selon la revendication 1 **caractérisé en ce que** les données collectées à l'étape a) sont de type T3 et sont des rendements historiques de culture sur P de l'espèce végétale considérée, de préférence sur au moins 3 années de culture.

3. Procédé selon l'une au moins des revendications précédentes **caractérisé en ce que** les données collectées à l'étape a) sont de type T4, à savoir des indicateurs de la biomasse végétale produite sur P, de préférence le NDVI, sont obtenus à partir d'au moins 2 - idéalement au moins 4 - images aériennes numérisées - de préférence satellites - de P, collectées sur au moins 2 - idéalement au moins 3- années.

4. Procédé selon l'une au moins des revendications précédentes **caractérisé en ce que** l'étape (c) de décomposition de P en différentes zones de gestion ($Z_g$), est effectuée à partir d'au moins deux types Tn,Tn' de données, de préférence en combinant sur une même grille définissant un maillage régulier dans la parcelle P, les données d'au moins deux types Tn,Tn' de données, par interpolation géostatistique.

5. Procédé selon l'une au moins des revendications précédentes **caractérisé en ce que** la pondération de l'étape (e) qui permet l'attribution, à chaque classe $C_k$, d'un IPA, consiste essentiellement à soumettre tout ou partie des regroupements [de préférence chaque regroupement], comprenant les zones de gestion ($Z_g$) obtenues à partir d'un type ou de différents types de données Tn, à une transformation centrée réduite de la (des) donnée(s) Tn composant le regroupement, puis à calculer, pour chacune des classes $C_k$ , la moyenne arithmétique de la (des) donnée(s) Tn centrée réduite, ladite moyenne constituant l'IPA.

6. Procédé selon l'une au moins des revendications précédentes **caractérisé en ce que** dans l'étape (g), le potentiel de rendement (PR) est déterminé pour chacune des classes par une fonction mathématique qui intègre l'IPA et le PRP.

7. Procédé selon l'une au moins des revendications précédentes **caractérisé en ce que**, la relation mathématique mise en oeuvre dans l'étape (h) est la suivante:

$$\mathrm{DS} = b_m - [(MaxPot) - \mathrm{PR}) * a];$$

dans laquelle:

    *a* est la pente d'une droite de régression de DS de la variété considérée en fonction du PR;
    *MaxPot* est le PR maximum donné par cette droite en conditions peu limitantes;
    $b_m$ est l'ordonnée de la droite à *MaxPot*;
    *a, $b_m$, et MaxPot* étant de préférence obtenu par simulation à partir d'un modèle écophysiologique ou à partir de données expérimentales.

8. Procédé selon l'une au moins des revendications précédentes **caractérisé en ce qu'**une version numérique de la carte de préconisation de DS produite à l'étape (i) est transmise à un dispositif-semoir automatisé géolocalisable et équipé de moyens informatiques pour lire cette carte numérique et pour effectuer le semis de la variété végétale considérée sur la parcelle P en se conformant à la carte de préconisation de DS.

9. Programme d'ordinateur comprenant une série d'instructions qui, lorsqu'elles sont exécutées par un processeur, mettent en oeuvre un procédé selon l'une au moins des revendications 1 à 8, dans lequel l'étape (j) est exécutée par un dispositif-semoir automatisé géolocalisable et équipé pour lire une carte numérique de préconisation de DS produite à l'étape (i) du procédé.

**10.** Dispositif-semoir, configuré pour la mise en oeuvre du procédé selon l'une au moins des revendications 1 à 8, automatisé géolocalisable et équipé pour lire une carte numérique de préconisation de DS produite à l'étape (i) du procédé selon l'une au moins des revendications 1 à 8.

**11.** Module informatique

• inclus dans le dispositif-semoir selon la revendication 10, automatisé géolocalisable et équipé pour lire une carte numérique de préconisation de DS produite à l'étape (i) du procédé selon l'une au moins des revendications 1 à 8,
• et permettant la géolocalisation dudit dispositif-semoir selon la revendication 10 et le semis d'une variété végétale de l'espèce donnée sur une parcelle P en se conformant à une carte numérique de préconisation de DS produite à l'étape (i) du procédé selon l'une au moins des revendications 1 à 8.

**Patentansprüche**

**1.** Computerimplementiertes Verfahren zur Steigerung der Produktivität einer landwirtschaftlichen Parzelle (P) in Bezug auf eine betreffende Pflanzensorte einer bestimmten Art, umfassend

a. Sammeln georeferenzierte Daten zu P, die die Produktivität verschiedener Bereiche von P berücksichtigen, wobei diese Daten zu Typen Tn (n=positive ganze Zahl) gehören, umfassend:

T1. geophysikalische Daten von P, vorzugsweise Leitfähigkeit/Resistivität,
T2. topografische Daten von P;
T3. Ertragskarten von P;
T4. Indikatoren für die auf P produzierte pflanzliche Biomasse (Vegetationsindizes), die durch Luftbildaufnahmen gewonnen werden, vorzugsweise der Normalized Difference Vegetation Index (NDVI);

b. Verarbeiten der Daten Tn, um sie mithilfe geeigneter geostatistischer Methoden auf P zu gruppieren;
c. Zerlegen von P für alle oder einige der in Schritt (b) erhaltenen Gruppierungen - vorzugsweise für jede Gruppierung - in verschiedene Bewirtschaftungszonen ($Z_g$) und Klassifizierung dieser verschiedenen Zonen ($Z_g$) in verschiedene Klassen $C_k$ (k=positive ganze Zahl) durch automatische statische Klassifizierung;
d. Gruppieren der Bewirtschaftungszonen ($Z_g$) von P, um diejenigen Bewirtschaftungszonen ($Z_g$) zu entfernen, deren Fläche oder größte Abmessung unterhalb einer Grenze (L) liegt, die durch technische Beschränkungen in Verbindung mit landwirtschaftlichen Geräten und landwirtschaftlichen Praktiken auf der Parzelle P festgelegt wird;
e. Bestimmen eines adimensionalen Produktivitätsindex (IPA) für jede der den Bewirtschaftungszonen ($Z_g$) von P zugeordneten Klassen $C_k$, indem jeder Klasse $C_k$ durch Gewichtung ein Wert zugewiesen wird, der für ihren Beitrag zur Produktivität der Parzelle repräsentativ ist;
f. Bestimmen eines Ertragspotenzials auf P (PRP) für die betreffende Art anhand eines Durchschnitts der historischen Erträge auf P für die betreffende Art;
g. Berechnen des Ertragspotenzials (PR) der betreffenden Art für jedes der Bewirtschaftungsgebiete ($Z_g$) aus dem in Schritt (e) ermittelten IPA und dem in Schritt (f) ermittelten PRP unter Verwendung einer bestimmten mathematischen Funktion;
h. Bestimmen einer Aussaatdichte (DS) für die Sorte der betreffenden Pflanzenart und für jede der Klassen $C_k$ aus einer mathematischen Beziehung, die DS als Funktion von PR angibt und bei der zumindest ein Teil der Konstanten auf der Grundlage von Simulationen erhalten wird, die aus einem ökophysiologischen Modell erzeugt werden:

▪ das anhand von experimentellen Daten kalibriert wird,
▪ das das Verhalten der betreffenden Sorte oder Pflanzenart in Abhängigkeit von den Umweltbedingungen, vorzugsweise Boden/Wetter, reproduziert,
▪ und die es ermöglicht, einerseits die Erträge dieser Sorte oder Art unter verschiedenen Umweltbedingungen zu simulieren und andererseits die optimalen Pflanzendichten für die betreffende Sorte zu bestimmen;

i. Erstellen wenigstens einer Karte von P, auf der die in Schritt (h) erhaltenen DS für alle Bewirtschaftungszonen ($Z_g$) eingetragen sind, wobei diese Karte eine DS-Empfehlungskarte ist;

j. Aussähen der betreffenden Pflanzensorte auf der Parzelle P gemäß der DS-Empfehlungskarte aus Schritt (i) mit einer automatisierten Saatmaschine, die geolokalisiert werden kann und dazu ausgestattet ist, eine in Schritt (i) des Verfahrens erstellte digitale DS-Empfehlungskarte zu lesen.

2. Verfahren nach Anspruch 1, **dadurch gekennzeichnet, dass** die in Schritt (a) gesammelten Daten vom Typ T3 sind und historische P-Anbauerträge der betreffenden Pflanzenart, vorzugsweise aus wenigstens drei Anbaujahren, darstellen.

3. Verfahren nach wenigstens einem der vorhergehenden Ansprüche, **dadurch gekennzeichnet, dass** die in Schritt (a) gesammelten Daten vom Typ T4 sind, d.h. Indikatoren der auf P produzierten pflanzlichen Biomasse, vorzugsweise NDVI, und aus wenigstens 2 - idealerweise wenigstens 4 - digitalisierten Luftbildern - vorzugsweise Satelliten - von P gewonnen werden, die über wenigstens 2 - idealerweise wenigstens 3 - Jahre gesammelt wurden.

4. Verfahren nach wenigstens einem der vorhergehenden Ansprüche, **dadurch gekennzeichnet, dass** der Schritt (c) der Zerlegung von P in verschiedene Bewirtschaftungszonen ($Z_g$) ausgehend von wenigstens zwei Datentypen Tn, Tn' durchgeführt wird, vorzugsweise durch Kombinieren der Daten von wenigstens zwei Datentypen Tn, Tn' durch geostatistische Interpolation auf einem gleichen Gitter, das eine regelmäßige Maschenweite in der Parzelle P definiert.

5. Verfahren nach wenigstens einem der vorhergehenden Ansprüche, **dadurch gekennzeichnet, dass** die Gewichtung des Schritts (e), der es ermöglicht, jeder Klasse $C_k$ einen IPA zuzuordnen, im Wesentlichen darin besteht, alle oder einen Teil der Gruppierungen [vorzugsweise jede Gruppierung], die aus einem Typ oder verschiedenen Typen von Daten Tn erhaltene Verwaltungsgebiete ($Z_g$) umfassen, einer reduzierten zentrierten Transformation der Daten Tn, die die Gruppierung bilden, zu unterziehen und dann für jede der Klassen $C_k$ den arithmetischen Mittelwert der reduzierten zentrierten Daten Tn zu berechnen, wobei der Mittelwert den IPA bildet.

6. Verfahren nach wenigstens einem der vorhergehenden Ansprüche, **dadurch gekennzeichnet, dass** in Schritt (g) das Ertragspotenzial (PR) für jede der Klassen durch eine mathematische Funktion bestimmt wird, die den IPA und den PRP integriert.

7. Verfahren nach wenigstens einem der vorhergehenden Ansprüche, **dadurch gekennzeichnet, dass** die in Schritt (h) implementierte mathematische Beziehung wie folgt lautet:

$$DS = b_m - [(MaxPot) - PR] * a]$$

wobei:

a die Steigung einer Regressionsgeraden von DS der betreffenden Sorte abhängig von PR ist;
*MaxPot* der maximale PR ist, der sich aus dieser Geraden unter wenig einschränkenden Bedingungen ergibt;
$b_m$ die Ordinate der Geraden bei *MaxPot* ist;
*a*, $b_m$, und *MaxPot* vorzugsweise durch Simulation aus einem ökophysiologischen Modell oder aus experimentellen Daten gewonnen werden.

8. Verfahren nach wenigstens einem der vorhergehenden Ansprüche, **dadurch gekennzeichnet, dass** eine digitale Version der in Schritt (i) erzeugten DS-Empfehlungskarte an eine geolokalisierbare und mit Computermitteln ausgestattete automatische Saatvorrichtung übertragen wird, um diese digitale Karte zu lesen und die Aussaat der betreffenden Pflanzensorte auf der Parzelle P gemäß der DS-Empfehlungskarte durchzuführen.

9. Computerprogramm, umfassend eine Reihe von Befehlen, die, wenn sie von einem Prozessor ausgeführt werden, ein Verfahren nach wenigstens einem der Ansprüche 1 bis 8 implementieren, wobei Schritt (j) von einer automatisierten geolokalisierbaren Saatvorrichtung ausgeführt wird, die dazu ausgestattet ist, eine in Schritt (i) des Verfahrens erzeugte digitale DS-Empfehlungskarte zu lesen.

10. Saatmaschine, welche für die Durchführung des Verfahrens nach wenigstens einem der Ansprüche 1 bis 8 ausgebildet ist, automatisiert, geolokalisierbar und dazu ausgestattet, eine digitale DS-Empfehlungskarte zu lesen, die in Schritt (i) des Verfahrens nach wenigstens einem der Ansprüche 1 bis 8 erzeugt wurde.

**11.** Computermodul,

• welches in der Saatmaschine nach Anspruch 10 enthalten ist, automatisiert, geolokalisierbar und dazu ausgestattet, eine in Schritt (i) des Verfahrens nach wenigstens einem der Ansprüche 1 bis 8 erzeugte digitale DS-Empfehlungskarte zu lesen,
• und welches die Geolokalisierung der Saatvorrichtung nach Anspruch 10 und die Aussaat einer Pflanzensorte der betreffenden Art auf einer Parzelle P gemäß einer in Schritt (i) des Verfahrens nach wenigstens einem der Ansprüche 1 bis 8 erzeugten digitalen DS-Empfehlungskarte ermöglicht.

**Claims**

**1.** Method, implemented by computer, for increasing the productivity of an agricultural plot (P) with regards to a plant variety of a given species, consisting of:

a. collecting georeferenced data relating to P that reports on the productivity of different areas in P, these data belonging to types Tn (n=positive integer) which consist of:

T1. geophysical data for P, preferably conductivity/resistivity,
T2. topographical data for P;
T3. yield maps for P;
T4. indicators of plant biomass produced on P (vegetation indices) as obtained by aerial imagery, preferably the Normalized Difference Vegetation Index (NDVI);

b. processing these data Tn to group them on P, using appropriate geostatistical methods;
c. for all or part of the groups - preferably for each group - obtained in step (b), breaking down P into different management areas ($Z_g$) and classifying these different areas ($Z_g$) into different classes $C_k$ ($_k$ = positive integer) by automated statistical classification;
d. grouping the management areas ($Z_g$) of P, so as to eliminate the management areas ($Z_g$) whose surface area or largest dimension is less than a limit (L) fixed by technical constraints linked to the agricultural equipment and agricultural practices used on the plot P;
e. determining a Dimensionless Productivity Index (DPI) for each of the classes $C_k$ assigned to the management areas ($Z_g$) of P, by using weighting to assign to each class $C_k$ a value representative of its contribution to the productivity of the plot;
f. assigning a fixed Yield Potential on P (PYP) for the species in question, based on an average of the historical yields on P for the species in question;
g. calculating, on the basis of the DPI obtained in step (e) and the PYP obtained in step (f) and using a given mathematical function, the Yield Potential (YP) of the species in question, for each of the management areas ($Z_g$);
h. determining a Sowing Density (SD), for the variety of the plant species in question and for each of the classes $C_k$, on the basis of a mathematical relationship that gives SD as a function of YP and for which at least some of the constants are obtained on the basis of simulations produced from an ecophysiological model:

▪ which is calibrated on the basis of experimental data,
▪ which reproduces the behavior of the plant variety or species in question according to environmental conditions, preferably soil/weather,
▪ and which allows simulating the yields of this variety or species according to different environmental conditions, and determining the optimal plant densities for the variety in question;

i. generating at least one map of P on which the various SD obtained in step (h) are plotted for all the management areas ($Z_g$), this map being an SD recommendation map;
j. sowing the plant variety in question on plot P while adhering to the SD recommendation map from step (i), using a geolocatable automated sowing device equipped to read a digital SD recommendation map generated in step (i) of the method.

**2.** Method according to claim 1, wherein the data collected in step a) are of type T3 and are historical crop yields on P of the plant species in question, preferably over at least 3 years of cultivation.

**3.** Method according to at least one of the preceding claims, wherein the data collected in step a) are of type T4, namely indicators of the plant biomass produced on P, preferably NDVI, and are obtained at from at least 2 - ideally at least 4 - digitized aerial images - preferably satellite images - of P, collected over at least 2 - ideally at least 3 - years.

4. Method according to at least one of the preceding claims, wherein the step (c) of breaking down P into different management areas ($Z_g$) is carried out based on at least two data types Tn,Tn', preferably by combining the data of at least two data types Tn,Tn' on a same grid defining a regular network on the plot P, by geostatistical interpolation.

5. Method according to at least one of the preceding claims, wherein the weighting in step (e) which allows allocating a DPI to each class $C_k$, essentially consists of subjecting all or part of the groups [preferably each group] comprising the management areas ($Z_g$) obtained on the basis of one data type or of different data types Tn, to a reduced centered transform of the datum or data Tn constituting the group, then calculating, for each of the classes $C_k$, the arithmetic mean of the reduced centered datum or data Tn, said mean constituting the DPI.

6. Method according to at least one of the preceding claims, wherein, in step (g), the yield potential (YP) is determined for each of the classes by a mathematical function which integrates the DPI and PYP.

7. Method according to at least one of the preceding claims, wherein the mathematical relationship applied in step (h) is as follows:

$$\mathrm{SD} = b_m - [(MaxPot) - \mathrm{YP}) * a];$$

where:

$a$ is the slope of an SD regression line for the variety in question as a function of the YP;
$MaxPot$ is the maximum YP given by this line under low-limitation conditions;
$b_m$ is the ordinate of the line at $MaxPot$;
$a$, $b_m$, and $MaxPot$ preferably being obtained by simulation based on an ecophysiological model or on experimental data.

8. Method according to at least one of the preceding claims, wherein a digital version of the SD recommendation map generated in step (i) is transmitted to a geolocatable automated sowing device equipped with computer technology for reading said digital map and for sowing the plant variety in question on the plot P while adhering to the SD recommendation map.

9. Computer program comprising a series of instructions which, when executed by a processor, implement a method according to at least one of claims 1 to 8, wherein step (j) is executed by a geolocatable automated sowing device equipped for reading a digital SD recommendation map generated in step (i) of the method.

10. Geolocatable automated sowing device, configured for implementing the method according to at least one of claims 1 to 8, and equipped for reading a digital SD recommendation map generated in step (i) of the method according to at least one of claims 1 to 8.

11. Computer module

• comprised in the geolocatable automated sowing device according to claim 10 which is equipped for reading a digital SD recommendation map generated in step (i) of the method according to at least one of claims 1 to 8,
• and enabling the geolocation of said sowing device according to claim 10 and the sowing of a plant variety of the given species on a plot P while adhering to a digital SD recommendation map produced in step (i) of the method according to at least one of claims 1 to 8.

FIG. 1

FIG. 2

FIG. 3A

FIG. 3B

[0,3.348]
(3.348,6.695]
(6.695,10.04]
(10.04,13.39]
(13.39,16.74]

FIG. 4A

FIG. 4B

**FIG. 5**

FIG. 6

| | |
|---|---|
| ▨ | Zone de gestion 1 |
| ▨ | Zone de gestion 2 |
| ▨ | Zone de gestion 3 |
| ▢ | Zone de gestion 4 |

FIG. 7

| | |
|---|---|
| ▨ | Zone de gestion 1 |
| ▨ | Zone de gestion 2 |
| ▨ | Zone de gestion 3 |
| ▢ | Zone de gestion 4 |

FIG. 8

| | |
|---|---|
| ▨ | Zone de gestion 1 |
| ▨ | Zone de gestion 2 |
| ▨ | Zone de gestion 3 |
| ▢ | Zone de gestion 4 |

FIG. 9

Zone de gestion 1
Zone de gestion 2
Zone de gestion 3
Zone de gestion 4

FIG. 10

Zone de gestion 1
Zone de gestion 2
Zone de gestion 3
Zone de gestion 4

FIG. 11

Zone de gestion 1
Zone de gestion 2
Zone de gestion 3
Zone de gestion 4

FIG. 12

FIG. 13

FIG. 14

Densités préconisées

FIG. 15

Plan expérimental

FIG. 16

Zones de gestion par satellite

FIG. 17

FIG. 18

**FIG. 19**

Plan d'expérience

| Témoin |
| Préconisation |

FIG. 20

Densités appliquées

| 72000 |
| 75000 |
| 77000 |
| 81000 |
| 85000 |
| 91000 |
| 93000 |

FIG. 21

Rendements nettoyés (T/ha)

FIG. 22

Traitement sur rendement sec (T/ha)

FIG. 23

Plan d'expérience

| Témoin |
| Préconisation |

FIG. 24

Densités appliquées

| 89000 |
| 90000 |
| 92000 |
| 94000 |

FIG. 25

Rendements nettoyés (T/ha)

FIG. 26

Traitement sur rendement sec (T/ha)

FIG. 27

## RÉFÉRENCES CITÉES DANS LA DESCRIPTION

**Documents brevets cités dans la description**

- US 20030018431 A1
- US 20150206255 A1
- WO 2011091278 A1